(19) Europäisches Patentamt / European Patent Office / Office européen des brevets

(11) **EP 3 034 566 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**08.06.2022   Patentblatt 2022/23**

(45) Hinweis auf die Patenterteilung:
**27.02.2019   Patentblatt 2019/09**

(21) Anmeldenummer: **14199139.8**

(22) Anmeldetag: **19.12.2014**

(51) Internationale Patentklassifikation (IPC):
**C09C 1/62** *(2006.01)*        **C09C 1/64** *(2006.01)*
**C09C 1/00** *(2006.01)*

(52) Gemeinsame Patentklassifikation (CPC):
**C09C 1/0015; C09C 1/62; C09C 1/642;**
C01P 2004/54; C01P 2006/62; C01P 2006/63;
C01P 2006/64; C09C 2200/1054; C09C 2200/1058;
C09C 2200/20; C09C 2200/301; C09C 2200/302;
C09C 2220/106

(54) **Metalleffektpigmente mit hohem Chroma und hoher Brillanz, Verfahren zu ihrer Herstellung und Verwendung derselben**

Metal effect pigments comprising a high chroma and a high brilliancy, method for their preparation and their use

Pigments à effet métallique d'une plus grande brillance et ayant un degré chromatique élevé, leur procédé de fabrication et leur utilisation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.06.2016   Patentblatt 2016/25**

(73) Patentinhaber: **Eckart GmbH**
**91235 Hartenstein (DE)**

(72) Erfinder:
• **Grüner, Michael**
  **91275 Auerbach (DE)**
• **Kaupp, Günter**
  **91284 Neuhaus/Pegnitz (DE)**
• **Schneider, Ralph**
  **91207 Lauf a.d. Pegnitz (DE)**

(74) Vertreter: **Strych, Sebastian et al**
**Mitscherlich PartmbB**
**Patent- und Rechtsanwälte**
**Sonnenstraße 33**
**80331 München (DE)**

(56) Entgegenhaltungen:
EP-A1- 1 553 144        EP-A1- 2 832 801
DE-A1- 19 836 810        DE-A1-102011 012 214

EP 3 034 566 B2

**Beschreibung**

Die vorliegende Erfindung betrifft Metalleffektpigmente umfassend ein metallisches plättchenförmiges Substrat und eine darauf aufgebrachte Beschichtung, wobei die Beschichtung wenigstens eine Abstandslage umfasst, ein Verfahren zur Herstellung der Metalleffektpigmente sowie die Verwendung derselben.

EP 1 270 682 A2 offenbart mehrschichtige Glanzpigmente basierend auf einem metallischen Substrat. Die Glanzpigmente umfassen mehrere Schichten aus (A) mindestens einem Schichtpaket, bestehend aus i) einer farblosen dielektrischen Schicht aus einem Material mit einer Brechzahl n ≤ 1,8 und ii) einer farblosen dielektrischen Schicht aus einem Material mit einer Brechzahl n > 1,8, sowie (B) eine selektiv oder nichtselektiv absorbierende Schicht. Der EP 1 270 682 A2 ist kein Hinweis auf eine Abstandslage innerhalb der Beschichtung zu entnehmen.

EP 1 114 103 A1 offenbart Mehrschichtpigmente auf Basis von plättchenförmigen Metallpigmenten, wobei die Metallpigmente mit einer amorphen glasartigen Schicht und nachfolgend mit ein oder mehreren Metalloxiden bzw. Metalloxidgemischen belegt werden. Eine Abstandslage innerhalb der Beschichtung ist in EP 1 114 103 A1 nicht beschrieben.

EP 1 685 198 A2 offenbart Effektpigmente mit einem plättchenförmigen Aluminium- oder Aluminiumlegierungskern und einer, durch nasschemische Oxidation des Kerns erhältlichen, den Aluminium- oder Aluminiumlegierungskern umhüllenden Aluminiumoxid- oder aluminiumoxid/hydroxidhaltigen Schicht. Die Effektpigmente sind mit wenigstens einer hochbrechenden Metallchalcogenidschicht belegt, wobei sich aufgrund der Porosität der Aluminiumoxid- oder aluminiumoxid/hydroxidhaltigen Schicht zwischen der hochbrechenden Metallchalcogenidschicht und der umhüllenden Aluminiumoxid- oder aluminiumoxid/hydroxidhaltigen Schicht eine Mischschicht ausbildet. Die sich durch die nasschemische Oxidation des Kerns in der Aluminiumoxid- oder aluminiumoxid/hydroxidhaltigen Schicht ausbildenden Poren sind nicht im Wesentlichen parallel zur Oberfläche des Aluminium- oder Aluminiumlegierungskerns angeordnet, sondern willkürlich in der Aluminiumoxid- oder aluminiumoxid/hydroxidhaltigen Schicht verteilt.

EP 0 708 154 A2 offenbart Glanzpigmente auf der Basis von mehrfach beschichteten plättchenförmigen metallischen Substraten, die mindestens ein Schichtpaket aus A) einer farblosen Beschichtung mit einem Brechungsindex von n ≤ 1,8 und B) einer selektiv absorbierenden Beschichtung mit einem Brechungsindex n ≥ 2,0 sowie gewünschtenfalls zusätzlich C) eine äußere, farblose oder selektiv absorbierende, von der darunterliegenden Schicht B) verschiedene Beschichtung aufweisen. EP 0 708 154 A2 offenbart keine Abstandslage innerhalb der Beschichtung.

EP 0 668 329 A2 offenbart Glanzpigmente auf der Basis von mehrfach beschichteten plättchenförmigen metallischen Substraten mit A) einer ersten, im Wesentlichen aus Siliziumoxid, Siliziumoxidhydrat, Aluminiumoxid und/oder Aluminiumoxidhydrat bestehenden Schicht, B) einer zweiten, im Wesentlichen aus Metall und/oder nichtselektiv absorbierendem Metalloxid bestehenden Schicht und C) gewünschtenfalls einer dritten, im Wesentlichen aus farblosem oder selektiv absorbierendem Metalloxid bestehenden Schicht. EP 0 668 329 A2 enthält keinen Hinweis auf eine Abstandslage innerhalb der Beschichtung.

EP 1 553 144 A1 offenbart ein farbiges beschichtetes Metalleffektpigment mit zunächst zwei passivierenden Schichten aus Phosphat und $SiO_2$, gefolgt von einer $SnO_2$- und danach einer $Fe_2O_3$-Schicht mit einer brillanten roten Farbe und hoher Chromazität. Die hierin offenbarten beschichteten Metalleffektpigmente vermögen jedoch keine Abstandslage und bestenfalls nur eine Schicht mit wenigstens zwei verschiedenen Metallionen aus der Gruppe der Metalle, bestehend aus Ti, Fe, Sn, Mn, Zr, Ca, Sr, Ba, Ni, Sb, Ag, Zn, Cu, Ce, Cr und Co, auszubilden.

DE 198 36 810 A1 offenbart ein plättchenförmiges Aluminiumsubstrat, das zunächst mit $H_2O_2$ vorbehandelt und dann mit $SiO_2$ sowie weiteren Schichten beschichtet wird. Die hier offenbarten Metalleffektpigmente vermögen keine Abstandsschicht auszubilden.

Die DE 10 2011 0122 14 A1 offenbart Effektpigmente, bei denen ein Aluminiumsubstrat naßchemisch soweit oxidiert wird, dass kaum noch ein metallischer Kern vorliegt. Diese Effektpigmente weisen daher keinen metallischen Glanz mehr auf.

EP 2 832 801 A1 offenbart ein Aluminiumsubstrat, welches zunächst mit $Fe_2O_3$ und dann mit $TiO_2$ beschichtet und anschließend bei 250 °C kalziniert wird. Derartige Metalleffektpigmente weisen keine Abstandsschicht auf.

Aufgabe der vorliegenden Erfindung war es ein hochchromatisches Pigment mit metallischem Glanz, hoher Brillanz und hoher Deckfähigkeit zur Verfügung zu stellen, welches gleichzeitig mit geringem Materialeinsatz auf einfache Art und Weise herstellbar ist.

Diese Aufgabe wird gelöst durch Bereitstellung eines Metalleffektpigments, welches ein metallisches plättchenförmiges Substrat und eine auf dem Substrat aufgebrachte Beschichtung umfasst, wobei die Beschichtung

a) optional eine Schicht 1 umfassend wenigstens ein Metalloxid, Metallhydroxid und/oder Metalloxidhydrat, wobei das Metallion wenigstens ein Metallion ausgewählt aus der Gruppe der Metalle, bestehend aus Al, Si, Sn und Zn, umfasst oder ist,

b) eine Schicht 2 umfassend wenigstens ein Metalloxid, Metallhydroxid und/oder Metalloxidhydrat,

c) eine Schicht 3 umfassend wenigstens ein Metalloxid, Metallhydroxid und/oder Metalloxidhydrat aufweist, wenigstens eine der Schichten 2 oder 3 wenigstens zwei verschiedene Metallionen enthält und die Schichten 2 und 3 durch eine Abstandslage unterbrochen sind, wobei die wenigstens zwei verschiedenen Metallionen der Schicht 2 und/oder 3 aus der Gruppe der Metalle, bestehend aus Ti, Fe, Sn, Mn, Zr, Ca, Sr, Ba, Ni, Sb, Ag, Zn, Cu, Ce, Cr und Co, ausgewählt sind,

wobei die wenigstens eine Abstandslage Verbindungen und Hohlräume aufweist und wobei die Abstandslage eine Steganzahldichte, definiert als Anzahl an Verbindungen bzw. Abstandshaltern pro Anzahl der Linien in Prozent von < 85% aufweist, wobei die parallelen Linien in einer rasterelektronenmikroskopischen Querschliffaufnahme mit einer Vergrößerung von mindestens 50000-fach, bezogen auf Polaroid 545 (4" × 5"), als Raster in 50 nm Abstand im 90° Winkel zur oberen und unteren Basislinie, welche jeweils der oberen und unteren Substratoberfläche entspricht, eingezogen werden.

Mit "unterbrochen" ist erfindungsgemäß gemeint, dass die Schichten 2 und 3 durch eine Abstandslage voneinander beabstandet sind bzw. auf Abstand gehalten werden.

Mit dem allgemeinen Ausdruck "Metalloxid, Metallhydroxid und/oder Metalloxidhydrat" ist erfindungsgemäß gemeint "Metalloxid und/oder Metallhydroxid und/oder Metalloxidhydrat". Dies gilt auch dann, wenn das Metall bzw. Metallion spezifiziert ist, beispielsweise als Titan(ion), Eisen(ion), Zinn(ion), Zirkonium(ion), etc.

Gemäß einer bevorzugten Ausführungsform liegt die optionale Schicht 1 direkt auf dem metallischen plättchenförmigen Substrat, die Schicht 2 folgt direkt auf die Schicht 1 und die Schicht 3 folgt auf die Schicht 2, wobei die Schichten 2 und 3 durch eine Abstandslage unterbrochen sind.

Gemäß einer weiteren Ausführungsform liegt die Schicht 2 direkt auf dem metallischen plättchenförmigen Substrat und die Schicht 3 folgt auf die Schicht 2, wobei die Schichten 2 und 3 durch eine Abstandslage unterbrochen sind.

Bevorzugte Weiterbildungen des Metalleffektpigments sind in den abhängigen Ansprüchen 2 bis 8 gegeben.

Des Weiteren wird die Aufgabe durch Bereitstellung eines Verfahrens zur Herstellung des erfindungsgemäßen Metalleffektpigments gelöst, wobei das Verfahren die folgenden Schritte umfasst:

(i) Optionales Aufbringen einer nicht kalzinierten Metalloxid-, Metallhydroxid- und/oder Metalloxidhydratschicht, wobei das Metallion wenigstens ein Metallion ausgewählt aus der Gruppe der Metalle, bestehend aus Al, Si, Sn und Zn umfasst oder ist, auf dem metallischen plättchenförmigen Substrat,

(ii) sequentielles Aufbringen von drei nicht kalzinierten Schichten A, B und C aus oder mit jeweils wenigstens einem Metalloxid, Metallhydroxid und/oder Metalloxidhydrat, wobei die Schichten A, B und C unmittelbar aufeinander angeordnet werden und wobei das in der Schicht B aufgebrachte wenigstens eine Metalloxid, Metallhydroxid und/oder Metalloxidhydrat in Bezug auf das Metallion verschieden von dem oder den Metallion(en) der Metalloxide, Metallhydroxide und/oder Metalloxidhydrate der Schicht A und/oder Schicht C ist, wobei die drei sequenziell aufgebrachten Metalloxide, Metallhydroxide und/oder Metalloxidhydrate zur Erzeugung der Schichten A, B und C, kein Metallion, ausgewählt aus der Gruppe der Metalle, bestehend aus Si, Mg und Al, umfasst oder ist,

(iii) Kalzinieren, optional unter reduzierenden Bedingungen, des in Schritt (ii) erhaltenen Produkts bei einer Temperatur aus einem Bereich von 320°C bis 970°C unter Erhalt des wenigstens eine Abstandslage umfassenden Metalleffektpigments,

wobei die in Schicht B enthaltenen Metallionen wenigstens teilweise, in Schicht A und/oder Schicht C unter Ausbildung der wenigstens einen Abstandslage im kalzinierten Effektpigment diffundieren.

Gegenstand der Erfindung ist weiterhin die Verwendung des erfindungsgemäßen Metalleffektpigments in kosmetischen Formulierungen, Kunststoffen, Folien, Textilien, keramischen Materialien, Gläsern, Farben, Druckfarben, Tinten, Lacken und/oder Pulverlacken.

Die der Erfindung zugrunde liegende Aufgabe wird des Weiteren durch Bereitstellung eines Gegenstandes gelöst, wobei der Gegenstand wenigstens ein erfindungsgemäßes Metalleffektpigment aufweist.

Die metallischen plättchenförmigen Substrate können aus der Gruppe, bestehend aus Aluminiumplättchen, Kupferplättchen, Zinkplättchen, Eisenplättchen, Titanplättchen, Edelstahlplättchen, Silberplättchen, Legierungen und Mischungen der vorstehend aufgeführten Metalle, ausgewählt werden. Bevorzugt werden die metallischen plättchenförmigen Substrate aus der Gruppe, bestehend aus Aluminiumplättchen, Kupferplättchen, Zinkplättchen, Eisenplättchen, Edelstahlplättchen, Legierungen und Mischungen der vorstehend aufgeführten Metalle, ausgewählt. Die vorgenannten metallischen plättchenförmigen Substrate können auch eine oder mehrere Beschichtungen aus oder mit wenigstens einem hoch- und/oder niedrigbrechendem Metalloxid, Metallhydroxid und/oder Metalloxidhydrat aufweisen und optional kalziniert sein. So können als Substrate also auch kommerziell erhältliche beschichtete Metalleffektpigmente verwendet werden. Gemäß einer bevorzugten Ausführungsform sind die erfindungsgemäß zu verwendenden Substrate unbeschichtete, metallische, plättchenförmige Substrate.

Besonders bevorzugt werden die metallischen plättchenförmigen Substrate aus der Gruppe, bestehend aus Aluminiumplättchen, Kupferplättchen, Zinkplättchen, Eisenplättchen, Legierungen und Mischungen der vorstehend aufgeführten Metalle, ausgewählt. Ganz besonders bevorzugt werden die metallischen plättchenförmigen Substrate aus der Gruppe, bestehend aus Aluminiumplättchen, Kupferplättchen, Zinkplättchen, Legierungen und Mischungen der vorstehend aufgeführten Metalle, ausgewählt. Insbesondere bevorzugt werden als metallische plättchenförmige Substrate Aluminiumplättchen eingesetzt.

Werden Aluminiumplättchen als metallisches plättchenförmiges Substrat eingesetzt, weisen diese bevorzugt einen Aluminiumgehalt von ≥ 97 Gew.-%, weiter bevorzugt von ≥ 98 Gew.-%, besonders bevorzugt von ≥ 99 Gew.-% und ganz besonders bevorzugt von ≥ 99,7 Gew.-%, jeweils bezogen auf das Gesamtgewicht des Aluminiumplättchens, auf. Bei einer bevorzugten Ausführungsform weisen die Aluminiumplättchen weiterhin einen Quecksilbergehalt von bevorzugt ≤ 1 ppm, einen Arsengehalt von bevorzugt ≤ 2 ppm, einen Bleigehalt von bevorzugt ≤ 10 ppm, einen Cadmiumgehalt von bevorzugt ≤ 1 ppm, einen Bariumgehalt von bevorzugt ≤ 10 ppm, einen Chromgehalt von bevorzugt ≤ 20 ppm, einen Nickelgehalt von bevorzugt ≤ 20 ppm, einen Kupfergehalt von bevorzugt ≤ 20 ppm, einen Cobaltgehalt von bevorzugt ≤ 20 ppm, einen Antimongehalt von bevorzugt ≤ 2 ppm, einen Selengehalt von bevorzugt ≤ 10 ppm und einen Zinkgehalt von bevorzugt ≤ 20 ppm auf.

Bei einer weiteren Ausführungsform sind die als metallisches plättchenförmiges Substrat verwendbaren Aluminium- oder Aluminiumlegierungsplättchen gemäß Anspruch 1 der WO 96/38505 A1 nasschemisch oxidiert.

Werden Kupferplättchen als metallisches plättchenförmiges Substrat eingesetzt, weisen diese bevorzugt einen Kupfergehalt von ≥ 95 Gew.-%, weiter bevorzugt von ≥ 96 Gew.-%, besonders bevorzugt von ≥ 97 Gew.-% und ganz besonders bevorzugt von ≥ 98 Gew.-%, jeweils bezogen auf das Gesamtgewicht des Kupferplättchens, auf. Bei einer bevorzugten Ausführungsform weisen die Kupferplättchen weiterhin einen Quecksilbergehalt bevorzugt von ≤ 1 ppm, einen Arsengehalt bevorzugt von ≤ 3 ppm, einen Bleigehalt bevorzugt von ≤ 20 ppm, einen Cadmiumgehalt bevorzugt von ≤ 15 ppm, einen Bariumgehalt bevorzugt von ≤ 10 ppm, einen Chromgehalt bevorzugt von ≤ 20 ppm, einen Nickelgehalt bevorzugt von ≤ 20 ppm, einen Cobaltgehalt bevorzugt von ≤ 20 ppm, einen Antimongehalt bevorzugt von ≤ 2 ppm und einen Selengehalt bevorzugt von ≤ 10 ppm auf.

Werden Goldbronzeplättchen als metallisches plättchenförmiges Substrat eingesetzt, weisen diese bevorzugt einen Kupfergehalt aus einem Bereich von 70 Gew.-% bis 95 Gew.-%, einen Zinkgehalt aus einem Bereich von < 5 Gew.-% bis <30 Gew.-%, einen Aluminiumgehalt aus einem Bereich von 0,01 Gew.-% bis ≤ 1,5 Gew.-%, einen Zinngehalt aus einem Bereich von 0,001 Gew.-% bis ≤ 0,5 Gew.-%, jeweils bezogen auf das Gesamtgewicht der Goldbronzeplättchen, auf. Bei einer bevorzugten Ausführungsform weisen die Goldbronzeplättchen weiterhin einen Quecksilbergehalt bevorzugt von ≤ 1 ppm, einen Arsengehalt bevorzugt von ≤ 3 ppm, einen Bleigehalt bevorzugt von ≤ 20 ppm, einen Cadmiumgehalt bevorzugt von ≤ 15 ppm, einen Bariumgehalt bevorzugt von ≤ 10 ppm, einen Chromgehalt bevorzugt von ≤ 20 ppm, einen Nickelgehalt bevorzugt von ≤ 20 ppm, einen Cobaltgehalt bevorzugt von ≤ 20 ppm, einen Antimongehalt bevorzugt von ≤ 2 ppm und einen Selengehalt bevorzugt von ≤ 10 ppm auf.

Werden Eisenplättchen als metallisches plättchenförmiges Substrat eingesetzt, werden diese vorzugsweise aus reduzierend behandeltem Carbonyleisenpulver gemäß Anspruch 1 der EP 1 251 152 A1 hergestellt.

Die mittlere Dicke der zu beschichtenden metallischen plättchenförmigen Substrate liegt bevorzugt in einem Bereich von 30 nm bis 2000 nm, weiter bevorzugt in einem Bereich von 35 nm bis 1500 nm, besonders bevorzugt in einem Bereich von 70 nm bis 900 nm und ganz besonders bevorzugt in einem Bereich von 90 nm bis 600 nm.

Bei einer weiteren Ausführungsform weisen die Aluminiumplättchen eine mittlere Dicke gemäß den jeweiligen Hauptansprüchen der WO 2004/087816 A2 oder der WO 2008/077612 A2 auf.

Bei einer weiteren Ausführungsform weisen die Eisenplättchen eine mittlere Dicke gemäß Hauptanspruch der WO 2009/144005 A1 auf.

Bei einer Ausführungsform beträgt die relative Standardabweichung der Dickenverteilung der metallischen plättchenförmigen Substrate 11% bis 98%, bevorzugt 22% bis 78%, besonders bevorzugt 28% bis 68% und ganz besonders bevorzugt 34% bis 64%. Die relative Standardabweichung in [%] ist dabei der Quotient aus berechneter Standardabweichung und mittlerer Dicke.

Die mittlere Dicke des metallischen plättchenförmigen Substrates kann über das in WO 2004/087816 A2 oder WO 2008/077612 A2 beschriebene Verfahren bestimmt werden. Vorzugsweise wird die mittlere Dicke des metallischen plättchenförmigen Susbtrats anhand des nachstehend unter IIh "Bestimmung der der mittleren Dicke der metallischen plättchenförmigen Substrate, der mittleren Schichtdicke der Schichten 1, 2 und 3, der mittleren Schichtdicke dergesamten Beschichtung, der mittleren Höhe $h_a$ der Abstandslage sowie der mittleren Höhe $h_H$ der Hohlräume" beschriebenen Verfahrens bestimmt. Mit dem Begriff "mittlere" ist erfindungsgemäß stets der arithmetische Mittelwert gemeint, sofern nicht anders angegeben.

Bei einer bevorzugten Ausführungsform weisen die metallischen plättchenförmigen Substrate ein Aspektverhältnis, definiert als Quotient aus Dso und mittlerer Dicke, bevorzugt aus einem Bereich von 2 bis 1000, weiter bevorzugt aus einem Bereich von 10 bis 600, besonders bevorzugt aus einem Bereich von 40 bis 500 und ganz besonders bevorzugt aus einem Bereich von 50 bis 300 auf.

Die erfindungsgemäßen Metalleffektpigmente umfassen optional eine Schicht 1 umfassend wenigstens ein Metalloxid, Metallhydroxid und/oder Metalloxidhydrat, wobei das Metallion wenigstens ein Metallion ausgewählt aus der Gruppe der Metalle Al, Si, Sn und Zn, umfasst oder ist. Die Schicht 1 kann optional mit einer direkt an die Schicht 1 angrenzenden Schicht, beispielsweise der Schicht 2, zumindest teilweise als Mischschicht vorliegen.

Bei den Schichten 2 und 3 der erfindungsgemäßen Metalleffektpigmente handelt es sich nach Kalzination vorzugsweise um hochbrechende Schichten bzw. jeweils um eine hochbrechende Schicht, deren Brechungsindex bevorzugt bei n > 1,8, besonders bevorzugt bei n ≥ 1,9 und ganz besonders bevorzugt bei n ≥ 2,1 liegt. Die Auswahl der wenigstens zwei unterschiedlichen Metallionen in den Schichten 2 und 3 erfolgt erfindungsgemäß so, dass das oder die sich daraus bildenden Metalloxid(e), Metallhydroxid(e) und/oder Metalloxidhydrat(e) in den Schichten 2 oder 3 vorzugsweise jeweils einen gemittelten Brechungsindex von n > 1,8 aufweist oder aufweisen.

Das wenigstens eine Metalloxid, Metallhydroxid und/oder Metalloxidhydrat der Schichten 2 oder 3 umfasst wenigstens zwei verschiedene Metallionen, wird ausgewählt aus der Gruppe der Metalle, bestehend aus Ti, Fe, Sn, Mn, Zr, Ca, Sr, Ba, Ni, Sb, Ag, Zn, Si, Al, Cu, Ce, Cr und Co, bevorzugt ausgewählt aus der Gruppe der Metalle, bestehend aus Ti, Fe, Sn, Si, Al, Mn, Zr, Ag, Zn, Cu und Ce, besonders bevorzugt ausgewählt aus der Gruppe der Metalle, bestehend aus Ti, Fe, Sn, Ag, Zr und Ce und ganz besonders bevorzugt ausgewählt aus der Gruppe der Metalle, bestehend aus Ti, Fe und Sn.

Die wenigstens zwei verschiedenen Metallionen liegen vorzugsweise entweder homogen in den Schichten 2 und/oder 3 verteilt vor oder bilden hierin einen Gradienten aus. In Ausnahmefällen können die wenigstens zwei verschiedenen Metallionen auch inhomogen verteilt in den Schichten 2 und/oder 3 vorliegen.

Mit "wenigstens zwei verschiedene Metallionen" ist erfindungsgemäß gemeint, dass wenigstens zwei Metallionen verschiedener Elemente vorliegen, beispielsweise Titan- und Eisenionen, oder Titan- und Zinnionen, oder Titan- und Zirkoniumionen, oder Eisen- und Zinnionen, oder Eisen- und Zirkoniumionen, etc. Die verschiedenen Metallionen können dabei in einer Mischung von Metalloxiden und/oder Metallhydroxiden und/oder Metalloxidhydraten und/oder auch in Mischoxiden und/oder Mischhydroxiden und/oder Mischoxidhydraten in der Schicht 2 und/oder Schicht 3 des erfindungsgemäßen Metalleffektpigments vorliegen. Die Schicht 2 und/oder Schicht 3 können diese Mischung von Metalloxiden und/oder Metallhydroxiden und/oder Metalloxidhydraten und/oder Mischoxiden und/oder Mischhydroxiden und/oder Mischoxidhydraten umfassen oder daraus bestehen.

Bei einer Ausführungsform umfasst eine der beiden Schichten 2 oder 3 lediglich eine Art Metallion, ausgewählt aus der Gruppe der Metalle, bestehend aus Fe, Ti, Sn, Zr und Zn, bevorzugt bestehend aus Fe, Ti, und Sn. Entsprechend weist die jeweils andere der beiden Schichten 3 oder 2 wenigstens zwei verschiedene Metallionen auf, bevorzugt ausgewählt aus der Gruppe der Metalle, bestehend aus Fe, Ti, Sn, Zr und Zn, weiter bevorzugt bestehend aus Ti, Sn und Zr.

Bei einer bevorzugten Ausführungsform umfassen sowohl die Schicht 2 als auch die Schicht 3 wenigstens ein Metalloxid, Metallhydroxid und/oder Metalloxidhydrat, wobei die Metallionen des wenigstens einen Metalloxids, Metallhydroxids und/oder Metalloxidhydrats wenigstens zwei verschiedene Metallionen, vorzugsweise ausgewählt aus der Gruppe der Metalle, bestehend aus Fe, Ti, Sn, Zr und Zn, weiter bevorzugt bestehend aus Fe, Ti, Sn und Zr, umfassen oder sind.

Die Metalloxid-, Metallhydroxid- und/oder Metalloxidhydratgehalte der erfindungsgemäßen Metalleffektpigmente werden als jeweiliges Metalloxid mittels Röntgenfluoreszenzanalyse (RFA) aus der Pulverschüttung bestimmt und gegebenenfalls als jeweiliges elementares Metall berechnet.

Die mittlere Schichtdicke der Schicht 1 der erfindungsgemäßen Metalleffektpigmente liegt bevorzugt in einem Bereich von 1 bis 200 nm, besonders bevorzugt in einem Bereich von 2 bis 100 nm und ganz besonders bevorzugt in einem Bereich von 5 bis 50 nm.

Die mittlere Schichtdicke der Schichten 2 und 3 der erfindungsgemäßen Metalleffektpigmente liegt jeweils bevorzugt in einem Bereich von 30 nm bis 300 nm, weiter bevorzugt jeweils in einem Bereich von 35 nm bis 250 nm, besonders bevorzugt jeweils in einem Bereich von 40 nm bis 230 nm und ganz besonders bevorzugt jeweils in einem Bereich von 50 nm bis 180 nm.

Bei einer bevorzugten Ausführungsform ist die mittlere Schichtdicke der Schichten 2 und 3 nahezu gleich. Unter einer "nahezu gleichen mittleren Schichtdicken" wird erfindungsgemäß verstanden, dass der Quotient aus der mittleren Schichtdicke der Schicht 2 und der mittleren Schichtdicke der Schicht 3 bevorzugt in einem Bereich von 0,5 bis 1,8, weiter bevorzugt in einem Bereich von 0,7 bis 1,6, besonders bevorzugt in einem Bereich von 0,8 bis 1,4 und ganz besonders bevorzugt in einem Bereich von 0,9 bis 1,2 liegt.

Bei einer weiteren Ausführungsform ist bei stofflich unterschiedlicher Zusammensetzung der Schichten 2 und 3 deren jeweilige optische Schichtdicke annähernd gleich, wobei die optische Schichtdicke der Schichten 2 und 3 der bekannten Lambda/4 Regel folgen kann oder auch nicht. Die optische Schichtdicke ist definiert als Produkt aus Brechungsindex und mittlerer Schichtdicke der jeweiligen Schicht.

Die optische Schichtdicke der Schichten 2 oder 3 der erfindungsgemäßen Metalleffektpigmente liegt jeweils vorzugsweise bei ≤ 1000 nm. Bevorzugt liegen die optischen Schichtdicken der Schichten 1, 2 oder 3 jeweils in einem Bereich von 50 nm bis 850 nm, besonders bevorzugt jeweils in einem Bereich von 80 nm bis 820 nm und ganz besonders bevorzugt jeweils in einem Bereich von 100 nm bis 800 nm.

Die mittlere Schichtdicke der gesamten Beschichtung der erfindungsgemäßen Metalleffektpigmente liegt vorzugsweise bei ≤ 750 nm. Bevorzugt liegt die mittlere Schichtdicke der gesamten Beschichtung in einem Bereich von 50 nm und 550 nm, besonders bevorzugt in einem Bereich von 78 nm und 430 nm und ganz besonders bevorzugt in einem Bereich von 95 nm und 340 nm.

Unter gesamter Beschichtung wird die komplette Beschichtung, die sich ausgehend von der Substratoberfläche senkrecht von dieser in einer Richtung erstreckt, verstanden.

Bei einer Ausführungsform beträgt die relative Standardabweichung der Schichtdickenverteilung der Schichten 2 und 3 jeweils 2% bis 74%, bevorzugt jeweils 3% bis 63%, besonders bevorzugt jeweils 4% bis 57% und ganz besonders bevorzugt jeweils 5% bis 49% und der Schichtdickenverteilung der gesamten Beschichtung 0,3% bis 31%, bevorzugt 1% bis 27% besonders bevorzugt 1,2% bis 24% und ganz besonders bevorzugt 1,9% bis 22%. Die relative Standardabweichung in [%] ist dabei der Quotient aus berechneter Standardabweichung und mittlerer Dicke.

Die Abstandslage zwischen den Schichten 2 und 3 ist vorzugsweise im Wesentlichen parallel zur Oberfläche des metallischen plättchenförmigen Substrats angeordnet. Unter "im Wesentlichen parallel" wird im Rahmen dieser Erfindung verstanden, dass in einer rasterelektronenmikroskopischen Querschliffaufnahme eine durch eine Abstandslage gelegte Regressionsgerade in Bezug auf eine an die Oberfläche des metallischen plättchenförmigen Substrats gelegte Regressionsgrade eine Steigung von vorzugsweise nahe Null aufweist.

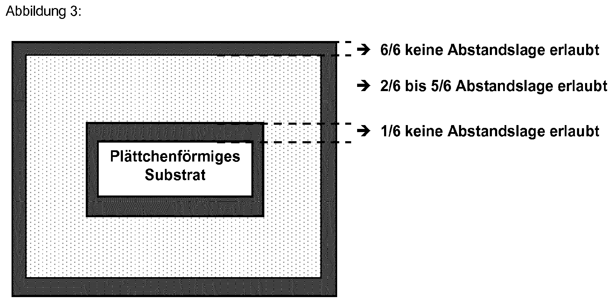

Die Position der Abstandslage innerhalb der gesamten Beschichtung kann variieren. Sind beispielsweise die mittleren Schichtdicken der Schichten 1, 2 und 3 nahezu identisch, liegt die Abstandlage, in Bezug auf die gesamte Beschichtung, etwa in der Mitte der gesamten Beschichtung, vorzugsweise aus optionaler Schicht 1 sowie den Schichten 2 und 3. Die Abstandslage ist vorzugsweise, in Bezug auf die gesamte Beschichtung, zwischen dem ersten Sechstels und dem sechsten Sechstels der gesamten Beschichtung angeordnet. Mit dem ersten Sechstel wird hierbei der dem metallischen plättchenförmigen Substrat zugewandte Anteil und mit dem sechsten Sechstel der dem metallischen plättchenförmigen Substrat abgewandte Anteil der gesamten Beschichtung, vorzugsweise aus optionaler Schicht 1 sowie den Schichten 2 und 3, bezeichnet (Abbildung 3).

Die zwischen den Schichten 2 und 3 ausgebildete Abstandslage weist erfindungsgemäß Verbindungen auf, die auch als Abstandshalter bezeichnet werden können, welche die beidseits der Abstandslage angrenzenden Schichten zum einen miteinander verbinden und zum anderen voneinander auf Abstand halten. Wie aus rasterelektronenmikroskopisch aufgenommenen Querschliffaufnahmen ersichtlich, können diese Verbindungen bzw. Abstandshalter, z.B. in Form von Stegen oder Säulen, im Winkel von etwa 90°, beispielsweise von 80° bis 100°, zur Oberfläche des metallischen plättchenförmigen Substrats angeordnet sein. Sie können aber auch jeden beliebigen anderen Winkel zwischen 5° und 175° einnehmen. Bevorzugt sind die Abstandshalter, insbesondere die Stege, vorzugsweise deren Längsachsen, in einem Winkel aus einem Bereich von 15° bis 150° und besonders bevorzugt in einem Winkel aus einem Bereich von 35° bis 135°, jeweils zur Oberfläche des metallischen plättchenförmigen Substrats angeordnet. Bei der Bestimmung des Winkels bildet die Substratebene den ersten Schenkel. Eine der Außenseiten des jeweils betrachteten Steges bildet den zweiten Schenkel. Ausgehend vom Winkelscheitel der beiden Schenkel wird der eingeschlossene Winkel bestimmt, wobei in der Draufsicht auf die rasterelektronenmikroskopisch aufgenommenen Querschliffaufnahmen 0° links und 180° rechts in der Substratebene liegend angenommen wird.

Die Verbindungen bzw. Abstandshalter können verschiedene geometrische Formen annehmen und sind vorzugsweise gleichmäßig flächig über die gesamte Abstandslage verteilt. Beispielsweise können die Verbindungen bzw. Abstandshalter netzartig, gitterartig, leiterartig, schwammartig oder wabenförmig vorliegen. Teilweise können auch Strukturelemente erkennbar sein, die denen in einem photonischen oder inversen photonischen Kristall, wie beispielsweise aus EP 2 371 908 A2, EP 1 546 063 A1 oder EP 1 121 334 A1 bekannt, ähnlich sind.

Die Verbindungen bzw. Abstandshalter umfassen wenigstens ein Metalloxid, Metallhydroxid und/oder Metalloxidhydrat. Bei einer bevorzugten Ausführungsform umfassen die Verbindungen bzw. Abstandshalter eine identische stoffliche Zusammensetzung wie die sich beidseits der Abstandslage befindlichen Schichten. Auch kann alternativ innerhalb der Verbindungen bzw. Abstandshalter ein Gradient zwischen verschiedenen Metalloxiden, Metallhydroxiden und/oder Metalloxidhydraten ausgebildet sein.

Bei einer bevorzugten Ausführungsform umfassen die Verbindungen bzw. Abstandshalter ein Metalloxid, Metallhydroxid und/oder Metalloxidhydrat, wobei die Metallionen der Metalloxide, Metallhydroxide und/oder Metalloxidhydrate wenigstens zwei Metallionen, ausgewählt aus der Gruppe der Metalle, bestehend aus Ti, Fe, Sn, Mn, Zr, Ca, Sr, Ba, Ni, Ag, Si, Al, Zn, Cu, Ce, Cr und Co, weiter bevorzugt aus der Gruppe bestehend aus Ti, Fe, Sn, Mn, Zr, Ag, Si, Al, Zn, Cu und Ce, besonders bevorzugt aus der Gruppe bestehend aus Ti, Fe, Sn, Zr, Ag und Ce, und ganz besonders bevorzugt aus der Gruppe bestehend aus Ti, Fe und Sn, umfassen oder sind.

Die Erfinder gehen davon aus, dass die Verbindungen bzw. Abstandshalter auch eine mechanische Stabilisierung der angrenzenden Schichten und somit des erfindungsgemäßen Metalleffektpigments bewirken können. Vermutlich bildet sich aufgrund der Anzahl an Verbindungen bzw. Abstandshaltern, der verschiedenartigen Winkel und geometrischen Formen, welche die Verbindungen bzw. Abstandshalter innerhalb der Abstandslage einnehmen können, und deren vorzugsweise gleichmäßig flächigen Verteilung innerhalb der Abstandslage, ein mechanisch sehr stabiles Metalleffektpigment aus. Die Haftung zwischen der gesamten Beschichtung und dem metallischen plättchenförmigen Substrat ist bei den erfindungsgemäßen Metalleffektpigmenten sehr gut. Selbst extreme Scherbedingungen, wie sie im sogenannten Waring Blender Test auftreten, überstehen die erfindungsgemäßen Metalleffektpigmente ohne nachweisbare Beschädigung. Die Durchführung des Waring Blender Tests ist nachfolgend in Abschnitt IIf Waring Blender Test beschrieben.

Neben ihrer überraschend guten mechanischen Stabilität verfügen die erfindungsgemäßen Metalleffektpigmente über eine ausgezeichnete Chemikalienbeständigkeit sowie über eine hervorragende Gasungsstabilität, wie dies gemäß den nachfolgenden Ausführungen im Abschnitt IIk "Chemikalientest" bzw. im Abschnitt Ili "Gasungstest" erläutert wird.

Die Abstandslage der erfindungsgemäßen Metalleffektpigmente besitzt bevorzugt eine mittlere Höhe $h_a$ aus einem Bereich von 5 nm bis 120 nm, weiter bevorzugt aus einem Bereich von 10 nm bis 105 nm, besonders bevorzugt aus einem Bereich von 12 nm bis 90 nm und ganz besonders bevorzugt aus einem Bereich von 15 nm bis 55 nm.

Zur Bestimmung der mittleren Höhe $h_a$ der Abstandslage, der mittleren Schichtdicke der Schichten 1, 2 und 3 sowie der mittleren Schichtdicke der gesamten Beschichtung wird anhand von rasterelektronenmikroskopischen Querschliffaufnahmen die obere und untere Substratoberfläche jeweils als Basislinie herangezogen. Mit oberer und unterer Substratoberfläche ist in der rasterelektronischen Querschliffaufnahme jeweils die längere Seite des metallischen plättchenförmigen Substrats gemeint. Die Basislinie wird in die rasterelektronenmikroskopische Querschliffaufnahme entlang der Oberfläche des metallischen plättchenförmigen Substrats gelegt, indem die zwei Schnittpunkte Substrat -optionale Schicht 1 bzw. Substrat - Schicht 2 vom linken und rechten Rand der rasterelektronenmikroskopischen Querschliffaufnahme miteinander durch eine Gerade verbunden werden.

Die rasterelektronenmikroskopischen Querschliffaufnahmen wurden mit Hilfe der Bildverarbeitungssoftware AxioVision 4.6.3. (Fa. Zeiss) untersucht.

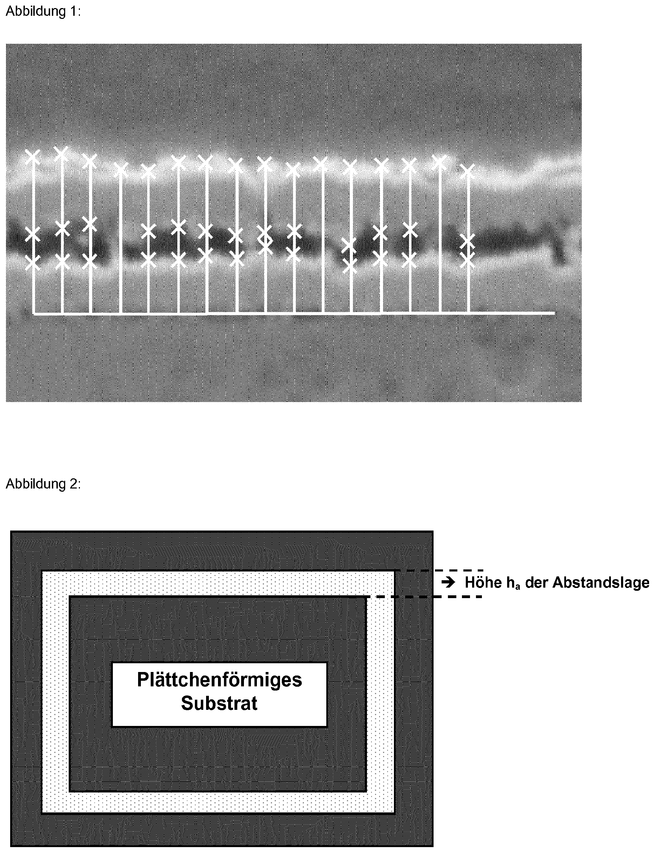

Im 90° Winkel zu der oberen und unteren Basislinie, die den beiden Oberflächen des plättchenförmigen Substrates entsprechen, werden im 50 nm Abstand so viele parallele Linien eingezogen, dass über das in der rasterelektronenmikroskopische Querschliffaufnahme gezeigte Effektpigment ein Raster gelegt ist (Abbildung 1). Die Vergrößerung der rasterelektronenmikroskopischen Querschliffaufnahme beträgt mindestens 50000-fach, bezogen auf Polaroid 545 (4" x 5").Ausgehend von der jeweiligen Basislinie vom metallischen plättchenförmigen Substrat werden in Richtung der jeweils außenliegenden Schicht 3 die Schnittpunkte zwischen der senkrecht zu der jeweiligen Basislinie angeordneten parallelen Linien mit den jeweiligen Grenzflächen der optionalen Schicht 1 zur Schicht 2, der Schicht 2 zur Abstandslage, der Abstandslage zur Schicht 3 und der Schicht 3 zur Umgebung bzw. zu einer etwaig weiter aufgebrachten Schicht manuell vermessen. Hierbei kann es vorkommen, dass eine der im 50 nm Abstand eingezeichneten Linien direkt über einer Verbindungsstelle bzw. einem Abstandshalter zu liegen kommt. In diesem Fall wird nur der jeweilige Schnittpunkt der Linie an der Grenzfläche Schicht 3 zur Umgebung bzw. zu einer etwaig weiter aufgebrachten Schicht erfasst.

Aus diesen Messwerten ergeben sich die Schichtdicken der Schichten 1, 2 und 3, die Schichtdicke der gesamten Beschichtung sowie die Höhe $h_a$ der Abstandslage durch Differenzbildung. Die Schichtdicke der Schicht 1 ergibt sich aus der Differenz der jeweiligen vermessenen Schnittpunkte an den jeweiligen Grenzflächen Schicht 1 zur Schicht 2 und der jeweiligen Basislinie. Die Schichtdicke der Schicht 2 ergibt sich aus der Differenz der jeweiligen vermessenen Schnittpunkte an den jeweiligen Grenzflächen Schicht 2 zur Abstandslage und entweder der optionalen Schicht 1 zur Schicht 2 oder der Basislinie zur Schicht 2. Die Schichtdicke der Schicht 3 ergibt sich aus der Differenz der jeweiligen vermessenen Schnittpunkte der Schicht 3 zur Umgebung bzw. einer etwaig weiter aufgebrachten Schicht und der Abstandslage zur Schicht 3. Die Schichtdicke der gesamten Beschichtung ergibt sich aus der Differenz der jeweiligen Schnittpunkte der Schicht 3 zur Umgebung bzw. zu einer etwaig weiter aufgebrachten Schicht und der jeweiligen Basislinie. Die Höhe $h_a$ der Abstandslage ergibt sich aus der Differenz der jeweiligen vermessenen Schnittpunkte Abstandslage zur Schicht 3 und Schicht 2 zur Abstandslage.

Das vorstehend beschriebene Verfahren wird entsprechend auch zur Bestimmung der Dicke des metallischen plättchenförmigen Substrats herangezogen.

Aus den auf die Weise bestimmten Einzelwerten der Dicke des Substrats, der Schichtdicken bzw. der Höhe $h_a$ werden die jeweiligen arithmetischen Mittelwerte gebildet, um die oben angegebenen Werte für die mittlere Dicke des metallischen plättchenförmigen Substrats, die jeweilige mittlere Schichtdicke bzw. die mittlere Höhe $h_a$ zu bestimmen.

Für eine aussagekräftige Statistik werden die oben beschriebenen Messungen an mindestens 100 der senkrecht zur Basislinien angeordneten parallelen Linien durchgeführt.

Weiterhin wird mit Hilfe der oben beschriebenen Linien, welche im 50 nm Abstand in eine rasterelektronenmikroskopische Aufnahme eingezeichnet werden, die Anzahl der Verbindungen pro Mikrometer bestimmt.

Weiterhin wird mit Hilfe der oben beschriebenen Linien, welche im 50 nm Abstand in eine rasterelektronenmikroskopische Aufnahme eingezeichnet werden, die Anzahl der Verbindungen bzw. Abstandshalter pro Mikrometer sowie die Steganzahldichte, definiert als die Anzahl der Verbindungen bzw. Abstandshalter pro Anzahl der Linien in Prozent, bestimmt.

Weisen die erfindungsgemäßen Metalleffektpigmente mehr als eine Abstandslage innerhalb der gesamten Beschichtung auf, so wird das soeben beschriebene Verfahren zur Vermessung der einzelnen Schichten und der Abstandslagen entsprechend übertragen.

Die Höhe $h_{ma}$ bezeichnet die Mitte der Abstandslage. Sie ergibt sich als Summe aus der Schichtdicke der optionalen Schicht 1, der Schicht 2 und der halben Höhe $h_a$ der Abstandslage. Die relative Höhe der Mitte der Abstandslage $h_{Rma}$ bildet sich aus dem Verhältnis von $h_{ma}$ und der Schichtdicke der gesamten Beschichtung. Die Standardabweichung der relativen Höhe $\sigma h_{Rma}$ liegt bevorzugt in einem Bereich von 0,2% bis 18%, weiter bevorzugt in einem Bereich von 0,3% bis 15%, besonders bevorzugt in einem Bereich von 0,4% bis 11% und ganz besonders bevorzugt in einem Bereich von 0,5% bis 8%. Die Standardabweichung der relativen Höhe $\sigma h_{ma}$ ist ein Maß dafür, dass die Abstandslage in einer definierten Position parallel zur Oberfläche des metallischen plättchenförmigen Substrats innerhalb der gesamten Beschichtung angeordnet ist.

Weisen die erfindungsgemäßen Metalleffektpigmente wenigstens eine weitere Abstandslage auf, so werden auch deren Höhe $h_{ma}$ sowie deren relative Höhe der Mitte der wenigstens einen weiteren Abstandslage $h_{Rma}$ über das vorstehend beschriebene Verfahren anhand von rasterelektronenmikroskopisch aufgenommenen Querschliffaufnahmen ermittelt. Die vorstehend angegebenen Werte für die Standardabweichung der relativen Höhe $\sigma h_{Rma}$ gelten für weitere Abstandslagen entsprechend.

Dem Fachmann ist bekannt, dass Metalleffektpigmente, welche mit wenigstens einem Metalloxid, Metallhydroxid und/oder Metalloxidhydrat belegt sind, statistisch verteilte Poren innerhalb der Beschichtung aufweisen. Diese Metalleffektpigmente aus dem Stand der Technik weisen keine Abstandslage auf. Die Abstandslage sowie die sich innerhalb der Abstandslage befindlichen Hohlräume der erfindungsgemäßen Metalleffektpigmente sind dagegen nicht statistisch innerhalb der gesamten Beschichtung verteilt, sondern sind innerhalb der gesamten Beschichtung parallel zur Oberfläche des metallischen plättchenförmigen Substrats angeordnet.

Die Abstände der Mittelpunkte der statistisch verteilten Poren zur Substratoberfläche wurden ebenfalls anhand rasterelektronenmikroskopischer Querschliffaufnahmen nach dem vorstehend beschriebenen Verfahren bestimmt. Hierzu wurden im 90° Winkel zu der oberen und unteren Basislinie, die den beiden Oberflächen des plättchenförmigen Substrats entsprechen, im 50 nm Abstand so viele parallele Linien eingezogen, dass über das in der rasterelektronenmikroskopische Querschliffaufnahme gezeigte Metalleffektpigment ohne Abstandslage ein Raster gelegt war. Sofern eine der parallelen Linien über einer oder mehreren Poren zu liegen kam, wurde deren Höhe(n), deren Porenmittelpunkt(e) und der Abstand des Porenmittelpunkts oder der Porenmittelpunkte zur Substratoberfläche bestimmt. Aus der statistischen Verteilung der Porenmittelpunkte lässt sich ebenfalls eine Standardabweichung ermitteln.

Die Standardabweichung der Abstände der Mittelpunkte der statistisch verteilten Poren zur Substratoberfläche liegt in Metalleffektpigmenten aus dem Stand der Technik, also bei Metalleffektpigmenten ohne Abstandslage, bei > 20%. Die Standardabweichung der Abstände der Mittelpunkte der statistisch verteilten Poren zur Substratoberfläche unterscheidet sich somit im Wert deutlich von der Standardabweichung der relativen Höhe der Mitte der Abstandslage der erfindungsgemäßen Metalleffektpigmente mit wenigstens einer Abstandslage.

Somit kann die Standardabweichung der Abstände der Porenmittelpunkte zur Substratoberfläche von Metalleffektpigmenten ohne Abstandslage der Standardabweichung der relativen Höhe der Mitte der Abstandslage von erfindungsgemäßen Metalleffektpigmenten mit wenigstens einer Abstandslage gegenübergestellt werden.

Die rasterelektronenmikroskopischen Aufnahmen wurden anhand von Querschliffen der erfindungsgemäßen Metalleffektpigmente mit dem Rasterelektronenmikroskop Supra 35 (Fa. Zeiss) erhalten.

Bei einer Ausführungsform beträgt die relative Standardabweichung der Höhenverteilung der Abstandslage 4% bis 75%, bevorzugt 7% bis 69% besonders bevorzugt 9% bis 63% und ganz besonders bevorzugt 13% bis 60%. Die relative Standardabweichung in [%] der Höhenverteilung ist dabei der Quotient aus der berechneten Standardabweichung und der mittleren Höhe.

Bei einer bevorzugten Ausführungsform weisen die erfindungsgemäßen Metalleffektpigmente innerhalb der wenigstens einen Abstandslage eine Anzahl an Verbindungen bzw. Abstandshaltern pro Mikrometer aus einem Bereich von 0 bis 11, weiter bevorzugt aus einem Bereich von 0 bis 9, besonders bevorzugt aus einem Bereich von 1 bis 7 und ganz besonders bevorzugt aus einem Bereich von 1 bis 3 auf.

Die erfindungsgemäßen Metalleffektpigmente weisen innerhalb der wenigstens einen Abstandslage eine Steganzahldichte, definiert als Anzahl an Verbindungen bzw. Abstandshaltern pro Anzahl der Linien in Prozent, von < 85%, bevorzugt aus einem Bereich von 1 % bis 75 %, besonders bevorzugt aus einem Bereich von 1 % bis 63 % und ganz besonders bevorzugt aus einem Bereich von 1 % bis 49 % auf.

Oberhalb einer Steganzahldichte von 85% wird im Sinne dieser Erfindung nicht mehr von einer Abstandslage gesprochen, da der hohe Anteil an Verbindungen bzw. Abstandshaltern dann zu einer weitestgehend durchgängigen Beschichtung führt.

Bei einer weiteren bevorzugten Ausführungsform umfassen die erfindungsgemäßen Metalleffektpigmente wenigstens eine, im Wesentlichen parallel zur Oberfläche des metallischen plättchenförmigen Substrats angeordnete Abstandslage, wobei die wenigstens eine Abstandslage jeweils eine mittlere Höhe $h_a$ aus einem Bereich von 19 nm bis 83 nm, besonders bevorzugt aus einem Bereich von 27 nm bis 66 nm und ganz besonders bevorzugt aus einem Bereich von 33 nm bis 57 nm aufweist.

Bei einer besonders bevorzugten Ausführungsform weisen die erfindungsgemäßen Metalleffektpigmente wenigstens eine Abstandslage der mittleren Höhe $h_a$ aus einem Bereich von 5 nm bis 100 nm, bevorzugt aus einem Bereich von 11 nm bis 79 nm und ganz besonders bevorzugt aus einem Bereich von 23 bis 57 nm auf, wobei innerhalb der wenigstens einen Abstandslage die Steganzahldichte aus einem Bereich von 1% bis 85%, bevorzugt aus einem Bereich von 2% bis 75%, besonders bevorzugt aus einem Bereich von 3% bis 70% und ganz besonders bevorzugt aus einem Bereich von 5% bis 65% ausgewählt ist.

Die Abstandslage umfasst neben den vorstehend beschriebenen Verbindungen bzw. Abstandshaltern Hohlräume. Diese Hohlräume werden räumlich durch die Schichten 2 und 3 sowie die Verbindungen bzw. Abstandshalter begrenzt.

Eine energiedispersive Röntgenmikroanalyse (EDX-Analyse) dieser Hohlräume lässt keinen Schluss auf feste oder flüssige Materie zu, so dass die Erfinder mit den zum jetzigen Zeitpunkt zur Verfügung stehenden Analysemethoden davon ausgehen, dass die Hohlräume innerhalb der Abstandslage ein Gas, vermutlich Luft, umfassen. Die angrenzenden Verbindungen bzw. Abstandshalter hingegen umfassen wenigstens ein Metalloxid, Metallhydroxid und/oder Metalloxidhydrat, wie vorstehend ausgeführt.

Die Hohlräume innerhalb der Abstandslage der erfindungsgemäßen Metalleffektpigmente können eine mittlere Höhe $h_H$ aus einem Bereich von 2 nm bis 119 nm, bevorzugt aus einem Bereich von 6 nm bis 105 nm, besonders bevorzugt aus einem Bereich von 11 nm bis 85 nm und ganz besonders bevorzugt aus einem Bereich von 18 nm bis 53 nm, einnehmen. Unter der Höhe $h_H$ wird der größte Abstand zwischen der untersten und obersten Hohlraumbegrenzung verstanden. Sie wird nach dem oben für die Höhe $h_a$ beschriebenen Verfahren bestimmt, indem in rastelektronenmikroskopisch aufgenommenen Querschliffaufnahmen im 90° Winkel zur Oberfläche des metallischen plättchenförmigen Substrates im 50 nm Abstand parallele Linien eingezeichnet werden. Die Differenz der beiden Schnittpunkte dieser Linien mit der oberen und unteren Hohlraumbegrenzung stellt die Höhe $h_H$ dar. Auch hier werden für eine aussagekräftige Statistik die oben beschriebenen Messungen an mindestens 100 Linien durchgeführt.

Mithin stellt die mittlere Höhe $h_a$ einen Maximalwert für die mittlere Höhe $h_H$ dar. Demnach können innerhalb der Abstandslage auch mehrere Hohlräume übereinander vorliegen.

Die mittlere Höhe der Abstandslage $h_a$ sowie die mittlere Höhe der Hohlräume $h_H$ wird anhand eines gehärteten Lackfilmes, in dem die erfindungsgemäßen Metalleffektpigmente im Wesentlichen planparallel zum Untergrund ausgerichtet sind, gemäß den Ausführungen in Abschnitt IIh "Bestimmung der der mittleren Dicke der metallischen plättchenförmigen Substrate, der mittleren Schichtdicke der Schichten 1, 2 und 3, der mittleren Schichtdicke der gesamten Beschichtung, der mittleren Höhe $h_a$ der Abstandslage sowie der mittleren Höhe $h_H$ der Hohlräume" bestimmt. Hierzu wird ein Querschliff des gehärteten Lackfilmes unter einem Rasterelektronenmikroskop (REM), wie vorstehend für $h_a$ beschrieben, untersucht. Alternativ zu diesen Querschliffen können die erfindungsgemäßen Metalleffektpigmente mittels des FIB-Verfahrens (FIB = focused ion beam) angeschnitten werden. Dazu wird ein feiner Strahl aus hochbeschleunigten Ionen (z.B. Gallium, Xenon, Neon oder Helium) mittels einer Ionenoptik auf einen Punkt fokussiert und zeilenweise über die zu bearbeitende Effektpigmentoberfläche geführt. Die Ionen geben beim Aufprall auf die Effektpigmentoberfläche einen Großteil ihrer Energie ab und zerstören die Beschichtung an diesem Punkt, was zu einem zeilenweisen Materialabtrag führt. Auch anhand der dann aufgenommenen rasterelektronenmikroskopischen Aufnahmen kann nach dem oben beschriebenen Verfahren die mittlere Höhe $h_a$, die mittlere Schichtdicke der Schichten 1, 2 und 3 sowie die mittlere Schichtdicke der gesamten Beschichtung ermittelt werden. Auch die mittlere Dicke des metallischen plättchenförmigen Substrats kann alternativ anhand von rasterelektronenmikroskopischen Aufnahmen der durch das FIB-Verfahren angeschnittenen Effektpigmente bestimmt werden.

Bei einer weiteren Ausführungsform umfassen die erfindungsgemäßen Metalleffektpigmente innerhalb der Abstandslage, verteilt über das gesamte Metalleffektpigment, gemessen anhand rasterelektronenmikroskopischer Querschliffaufnahmen, einen Flächenanteil an Hohlräumen aus einem Bereich von 51% bis 99%, bevorzugt aus einem Bereich von 63% bis 96%, besonders bevorzugt aus einem Bereich von 76% bis 95% und ganz besonders bevorzugt aus einem Bereich von 84% bis 94% und einen Flächenanteil an Verbindungen bzw. Abstandshaltern aus einem Bereich von 3% bis 49%, bevorzugt aus einem Bereich von 4% bis 37%, besonders bevorzugt aus einem Bereich von 5% bis 24% und ganz besonders bevorzugt aus einem Bereich von 6% bis 16%.

Weiterhin ist bevorzugt, dass in der Abstandslage das durch die Verbindungen bzw. Abstandshalter eingenommene Gesamtvolumen kleiner ist als das durch die Hohlräume eingenommene Gesamtvolumen. Bevorzugt beträgt in der Abstandslage das durch die Verbindungen bzw. Abstandshalter eingenommene Gesamtvolumen weniger als 50 Vol.-%, weiter bevorzugt weniger als 30 Vol.-%, besonders bevorzugt weniger als 20 Vol.-% und ganz besonders bevorzugt weniger als 10 Vol.-% des durch die Hohlräume eingenommenen Gesamtvolumens.

Die erfindungsgemäßen Metalleffektpigmente zeichnen sich durch einen außergewöhnlichen Glanz und einem hohen Chroma aus.

Der Glanz der erfindungsgemäßen Metalleffektpigmente wird anhand von Schwarz-Weiß-Deckungskarten mit Hilfe eines Micro-Tri-Gloss Glanzmessgerätes, Fa. Byk-Gardner, gemäß den nachfolgenden Ausführungen im Abschnitt IId "Glanzmessungen" bestimmt. Das Chroma der erfindungsgemäßen Metalleffektpigmente wird ebenfalls anhand von Schwarz-Weiß-Deckungskarten mit dem Mehrwinkelfarbmessgerät BYK-mac (Fa. Byk-Gardner) gemäß den nachfolgenden Ausführungen im Abschnitt IIc "Winkelabhängige Farbmessungen" bestimmt. Weitere optische Effekte, wie Glitzer und Körnigkeit, werden gemäß den nachfolgenden Ausführungen im Abschnitt IIe "Effektmessungen" bestimmt.

Bei einer Ausführungsform umfassen die erfindungsgemäßen Metalleffektpigmente neben den vorstehend beschriebenen Schichten 1, 2 und 3 weitere hoch- und/oder niedrigbrechende Schichten, die entweder, betrachtet vom metallischen plättchenförmigen Substrat aus, unterhalb oder oberhalb der Schichten 2 und 3 angeordnet sein können. Diese weiteren Schichten können Metalloxide, Metallhydroxide, Metalloxidhydrate umfassen, wobei die Metallionen der Metalloxide, Metallhydroxide, Metalloxidhydrate wenigstens ein Metallion aus der Gruppe der Metalle, bestehend aus Ti, Fe, Sn, Mn, Zr, Ca, Sr, Ba, Ni, Ag, Si, Al, Zn, Cu, Ce, Cr und Co, bevorzugt ausgewählt aus der Gruppe der Metalle, bestehend aus Ti, Fe, Sn, Zr, Ag, Si, Al, Zn, Cu, Ce, Cr und besonders bevorzugt ausgewählt aus der Gruppe der Metalle, bestehend aus Ti, Fe und Sn umfassen oder sind. Außerdem können diese weiteren Schichten semitransparente Metalle, ausgewählt aus der Gruppe, bestehend aus Ag, Al, Cr, Ni, Au, Pt, Pd, Cu, Zn und Ti, bevorzugt ausgewählt aus der Gruppe, bestehend aus Ag, Au und Cu, jeweils deren Legierungen und/oder Mischungen hiervon umfassen.

Bei einer Ausführungsform kann jede der Schichten der erfindungsgemäßen Metalleffektpigmente mit einer Dotierung versehen sein, wobei die Dotierung Metalloxide, Metallhydroxide und/oder Metalloxidhydrate umfassen kann, und die Metallionen der Metalloxide, Metallhydroxide, und/oder Metalloxidhydrate wenigstens ein Metallion, ausgewählt aus der Gruppe der Metalle, bestehend aus Al, Ce, Zr oder Sn, bevorzugt Al, Zr oder Sn, umfasst oder ist. Der Anteil an Dotierung liegt bevorzugt bei insgesamt $\leq$ 1 Gew.-%, besonders bevorzugt bei insgesamt $\leq$ 0,5 Gew.-% und ganz besonders bevorzugt bei insgesamt $\leq$ 0,2 Gew.-%, jeweils bezogen auf das Gesamtgewicht der Metalleffektpigmente.

Bei einer weiteren Ausführungsform kann die gesamte Beschichtung der erfindungsgemäßen Metalleffektpigmente neben der Abstandslage zwischen den Schichten 2 und 3 wenigstens eine weitere Abstandslage umfassen, welche auch im Wesentlichen parallel zur Oberfläche des metallischen plättchenförmigen Substrats angeordnet ist. Vorzugsweise weisen die erfindungsgemäßen Metalleffektpigmente nicht mehr als vier Abstandslagen innerhalb der gesamten Beschichtung auf, da deren optische Qualität dann abnimmt. Erfindungsgemäß befindet sich, auch wenn das erfindungsgemäße Metalleffektpigment mehr als eine Abstandlage umfasst, in Bezug auf die gesamte Beschichtung weder im ersten Sechstel noch im sechsten Sechstel der gesamten Beschichtung eine Abstandslage.

Die erfindungsgemäßen Metalleffektpigmente können eine beliebige mittlere Teilchengröße $D_{50}$ aufweisen. Die Dso-Werte der erfindungsgemäßen Metalleffektpigmente liegen vorzugsweise in einem Bereich von 3 $\mu$m bis 150 $\mu$m. Bevorzugt liegen die Dso-Werte der erfindungsgemäßen Metalleffektpigmente in einem Bereich von 4 $\mu$m bis 170 $\mu$m, weiter bevorzugt in einem Bereich von 5 $\mu$m bis 140 $\mu$m, besonders bevorzugt in einem Bereich von 7 $\mu$m bis 90 $\mu$m und ganz besonders bevorzugt in einem Bereich von 9 $\mu$m bis 56 $\mu$m. Äußerst bevorzugt weisen die erfindungsgemäßen Metalleffektpigmente einen Dso-Wert aus einem Bereich 6 $\mu$m bis 14 $\mu$m oder aus einem Bereich von 15 $\mu$m bis 35 $\mu$m auf.

Die $D_{10}$-Werte der erfindungsgemäßen Metalleffektpigmente umfassen vorzugsweise einen Bereich von 1 $\mu$m bis 60 $\mu$m, weiter bevorzugt liegen die $D_{10}$-Werte in einem Bereich von 2 $\mu$m bis 40 $\mu$m und besonders bevorzugt in einem Bereich von 4 $\mu$m bis 31 $\mu$m. Ganz besonders bevorzugt liegen die $D_{10}$-Werte in einem Bereich von 5 |jm bis 19 $\mu$m.

Die $D_{90}$-Werte der erfindungsgemäßen Metalleffektpigmente umfassen vorzugsweise einen Bereich von 10 $\mu$m bis 600 $\mu$m, weiter bevorzugt liegen die $D_{90}$-Werte der erfindungsgemäßen Metalleffektpigmente in einem Bereich von 30 $\mu$m bis 200 $\mu$m, besonders bevorzugt in einem Bereich von 40 $\mu$m bis 150 $\mu$m und ganz besonders bevorzugt in einem Bereich von 45 $\mu$m bis 120 $\mu$m.

Der $D_{10}$-, $D_{50}$- bzw. $D_{90}$-Wert der Summenhäufigkeitsverteilung der volumengemittelten Größenverteilungsfunktion, wie sie durch Laserbeugungsmethoden erhalten wird, gibt an, dass 10%, 50% bzw. 90% der erfindungsgemäßen Metalleffektpigmente einen volumengemittelten Durchmesser aufweisen, der gleich oder kleiner als der jeweils angegebene Wert ist. Die Größenverteilungskurve der Metalleffektpigmente wird mit dem Gerät Cilas 1064 der Fa. Quantachrome ermittelt. Die Auswertung der Streulichtsignale erfolgt nach der Fraunhofer-Theorie, welche auch Brechungs- und Absorptionsverhalten der Partikel beinhaltet.

Bei einer Ausführungsform besitzen die erfindungsgemäßen Metalleffektpigmente einen Span $\Delta D$, definiert als $\Delta D = \frac{D_{90} - D_{10}}{D_{50}}$ , aus einem Bereich von 0,7 bis 2,5, bevorzugt aus einem Bereich von 0,8 bis 2,2, weiter bevorzugt aus einem Bereich von 0,9 bis 1,9, besonders bevorzugt aus einem Bereich von 0,9 bis 1,8 und ganz besonders bevorzugt aus einem Bereich von 1 bis 1,7.

Die erfindungsgemäßen Metalleffektpigmente können wie folgt hergestellt werden:

- Suspendieren der metallischen plättchenförmigen Substrate in einem geeigneten Lösungsmittel bei einer Temperatur aus einem Bereich von 50 bis 100°C,
- optional Aufbringen einer Metalloxid-, Metallhydroxid- und/oder Metalloxidhydratschicht, wobei das Metallion wenigstens ein Metallion ausgewählt aus der Gruppe der Metalle, bestehend aus Si, Al, Sn und Zn umfasst oder ist,
- sequentielles Aufbringen von drei nicht kalzinierten Schichten A, B und C aus oder mit jeweils wenigstens einem Metalloxid, Metallhydroxid und/oder Metalloxidhydrat, wobei die Schichten A, B und C unmittelbar aufeinander angeordnet werden und wobei das in der Schicht B aufgebrachte wenigstens eine Metalloxid, Metallhydroxid und/oder Metalloxidhydrat in Bezug auf das Metallion verschieden von dem oder den Metallion(en) der Metalloxide, Metallhydroxide und/oder Metalloxidhydrate der Schicht A und/oder Schicht C ist, wobei die drei sequenziell aufgebrachten Metalloxide, Metallhydroxide und/oder Metalloxidhydrate zur Erzeugung der Schichten A, B und C, kein Metallion, ausgewählt aus der Gruppe der Metalle, bestehend aus Si, Mg und Al, umfasst oder ist,

- Abtrennen der beschichteten Substrate von der/den Beschichtungslösung(en), optional Waschen und/oder optional Trocknen der beschichteten Substrate,
- Kalzinieren, optional unter reduzierenden Bedingungen, bei Temperaturen aus einem Bereich von 320°C bis 970°C, bevorzugt aus einem Bereich von 400°C bis 930°C und besonders bevorzugt aus einem Bereich von 500°C bis 750°C unter Erhalt der erfindungsgemäßen Metalleffektpigmente umfassend wenigstens eine Abstandslage.

Bei einer bevorzugten Ausführungsform werden die erfindungsgemäßen Metalleffektpigmente nach dem vorstehenden Verfahren hergestellt.

Das Abscheiden der jeweiligen Metalloxide, Metallhydroxide und/oder Metalloxidhydrate kann im Wässrigen oder in organischen Lösungsmitteln erfolgen. Im Wässrigen ist hierbei vorzugsweise der pH-Wert konstant in einem Bereich von pH 1,4 bis 10,0 in Abhängigkeit vom Metallsalz zu halten.
In organischen Lösungsmitteln wird eine Hydrolyse der jeweiligen Alkoholate zur Abscheidung bevorzugt.

Zusätzlich zu den wenigstens drei sequenziell aufgebrachten, vorzugsweise abgeschiedenen, Metalloxiden, Metallhydroxiden und/oder Metalloxidhydraten können selbstverständlich weitere Metalloxide, Metallhydroxide und/oder Metalloxidhydrate vorher und/oder nachfolgend aufgebracht werden, so dass unterhalb bzw. oberhalb der Schicht 2/Abstandslage/Schicht 3 weitere Schichten angeordnet sein können.

Beim Kalzinieren diffundieren überraschenderweise vermutlich die in der Schicht B vorhandenen Metallionen in die Schicht A und/oder Schicht C unter Ausbildung von gemischten Metalloxiden und/oder gemischten Metallhydroxiden und/oder Metalloxidhydraten sowie Mischungen daraus. Aufgrund der Diffusion der Metallionen aus der Schicht B in die Schicht A und/oder Schicht C werden beim Kalzinieren die erfindungsgemäßen Schichten 2 und 3 sowie die dazwischenliegende Abstandslage ausgebildet, wobei wenigstens eine der beiden Schichten 2 und 3 wenigstens zwei unterschiedliche Metallionen umfasst. Aus den ursprünglich drei nacheinander abgeschiedenen Schichten A, B und C entstehen somit beim Kalzinieren die Schichten 2 und 3 sowie die dazwischen liegende Abstandslage, wobei wenigstens eine der beiden Schichten 2 und 3 wenigstens zwei unterschiedliche Metallionen umfasst.

Es wird angenommen, dass unter anderem die unterschiedliche Mobilität der Metalloxide, Metallhydroxide und/oder Metalloxidhydrate zueinander beim Kalzinieren für die Ausbildung der Abstandslage verantwortlich ist.

Bei einer bevorzugten Ausführungsform umfassen das erste und das dritte der drei sequenziell aufgebrachten, vorzugsweise abgeschiedenen, Metalloxide, Metallhydroxide und/oder Metalloxidhydrate wenigstens ein Metallion, ausgewählt aus der Gruppe der Metalle, bestehend aus Fe, Ti, Sn und Zr. Das erste und das dritte Metalloxid, Metallhydroxid und/oder Metalloxidhydrat erzeugen nach dem Aufbringen die Schicht A bzw. Schicht C. Das zweite der drei sequenziell aufgebrachten, vorzugsweise abgeschiedenen, Metalloxide, Metallhydroxide und/oder Metalloxidhydrate erzeugt die Schicht B und umfasst wenigstens ein Metallion, ausgewählt aus der Gruppe der Metalle, bestehend aus Fe, Sn, Zr, Ti und Ce, das verschieden von den Metallionen der zur Erzeugung der Schicht A und Schicht C abgeschiedenen Metalloxide, Metallhydroxide und/oder Metalloxidhydrate ist. In der Schicht A und der Schicht C können die aufgebrachten, vorzugsweise abgeschiedenen, Metalloxide, Metallhydroxide und/oder Metalloxidhydrate in Bezug auf das oder die Metallion(en) gleich oder voneinander verschieden sein.

Erfindungsgemäß umfassen die drei sequenziell aufgebrachten, vorzugsweise abgeschiedenen, Metalloxide, Metallhydroxide und/oder Metalloxidhydrate zur Erzeugung der Schichten A, B und C, kein(e) Metallion(en), ausschließlich ausgewählt aus der Gruppe der Metalle, bestehend aus Si, Mg und Al.

Die Kalzination unter reduzierenden Bedingungen erfolgt bevorzugt in Gegenwart von Formiergas (N2/ H2).

Vorstehende Ausführungen werden im Folgenden beispielhaft anhand verschiedener Beschichtungen näher erläutert.
Wird beispielsweise nacheinander ein wasserlösliches Titan(IV)salz, ein wasserlösliches Eisen(III)salz und wiederum ein wasserlösliches Titan(IV)salz zu einer Suspension eines mit $SiO_2$ beschichteten, metallischen plättchenförmigen Substrats gegeben, entsteht beim abschließenden Kalzinieren, betrachtet im REM-Querschliff ausgehend vom Substrat, auf die bereits vorhandene $SiO_2$-Beschichtung folgend, eine Schicht 2 umfassend ein Metalloxid, Metallhydroxid und/oder Metalloxidhydrat, wobei die Metallionen des Metalloxids, Metallhydroxids und/oder Metalloxidhydrats Titanionen und/oder Eisenionen umfassen oder sind, eine Abstandslage sowie eine Schicht 3 umfassend ein Metalloxid, Metallhydroxid und/oder Metalloxidhydrat wobei die Metallionen des Metalloxids, Metallhydroxids und/oder Metalloxidhydrats Titanionen und/oder Eisenionen umfassen oder sind.

Wird beispielsweise nacheinander ein wasserlösliches Titan(IV)salz, ein wasserlösliches Zinn(IV)salz und wiederum ein wasserlösliches Titan(IV)salz zu einer Suspension eines mit $SiO_2$ beschichteten, metallischen plättchenför-

migen Substrats gegeben, entsteht beim abschließenden Kalzinieren, betrachtet im REM-Querschliff ausgehend vom Substrat, auf die bereits vorhandene SiO$_2$-Beschichtung folgend, eine Schicht 2 umfassend ein Metalloxid, Metallhydroxid und/oder Metalloxidhydrat wobei die Metallionen des Metalloxids, Metallhydroxids und/oder Metalloxidhydrats Titanionen und/oder Zinnionen umfassen oder sind, eine Abstandslage sowie eine Schicht 3 umfassend ein Metalloxid, Metallhydroxid und/oder Metalloxidhydrat, wobei die Metallionen des Metalloxids, Metallhydroxids und/oder Metalloxidhydrats Titanionen und/oder Zinnionen umfassen oder sind.

Wird beispielsweise ein wasserlösliches Titan(IV)salz zu einer Suspension eines kalzinierten, mit SiO$_2$ beschichteten, metallischen plättchenförmigen Substrats gegeben, nach Abscheiden von Titandioxid, Titanhydroxid und/oder Titanoxidhydrat kalziniert, dieses Produkt nach dem Kalzinieren wieder suspendiert und nacheinander ein wasserlösliches Zinn(IV)salz sowie wiederum ein wasserlösliches Titan(IV)salz zugebenen, entsteht beim erneuten abschließenden Kalzinieren, betrachtet im REM-Querschliff ausgehend vom Substrat, auf die bereits vorhandene SiO$_2$-Beschichtung sowie die Schicht 2 umfassend ein Metalloxid, Metallhydroxid und/oder Metalloxidhydrat, wobei das Metallion des Metalloxids, Metallhydroxids und/oder Metalloxidhydrats wenigstens Titanionen umfasst oder sind, folgend, eine Abstandslage sowie eine Schicht 3 umfassend ein Metalloxid, Metallhydroxid und/oder Metalloxidhydrat, wobei das Metallion des Metalloxids, Metallhydroxids und/oder Metalloxidhydrats Titanionen und/oder Zinnionen umfassen oder sind.

Weisen die erfindungsgemäßen Metalleffektpigmente zusätzlich zu den wenigstens zwei oder drei sequenziell aufgebrachten, vorzugsweise abgeschiedenen, Metalloxiden, Metallhydroxiden und/oder Metalloxidhydraten weitere Metalloxide, Metallhydroxide und/oder Metalloxidhydrate umfassende Schichten auf, so können sich auch innerhalb der weiteren Schichten weitere Abstandslagen ausbilden, sofern die oben, für die wenigstens zwei oder drei sequenziell aufgebrachten, vorzugsweise abgeschiedenen, Metalloxide, Metallhydroxide und/oder Metalloxidhydrate beschriebenen Verfahrensschritte eingehalten werden.

Die erfindungsgemäßen Metalleffektpigmente können optional mit wenigstens einer äußeren Schutzschicht versehen sein, die die Gasungsstabilität und/oder chemische Stabilität weiter erhöht. Die optional vorhandene Schutzschicht umfasst Polymere wie Acrylate, Epoxide, Metalloxide, Metallhydroxide und/oder Metalloxidhydrate, wobei das Metallion wenigstens ein Metallion aus der Gruppe der Metalle, bestehend aus Si, Ce, Cr, Al, Sn, Zr, Zn und Mischungen davon, vorzugsweise ausgewählt aus der Gruppe der Metalle Si, Ce, Al, Sn, Zr und Mischungen davon, umfasst oder ist. Hierbei liegt der Anteil der optional vorhandenen Schutzschicht bevorzugt in einem Bereich von 0,1 Gew.-% bis 7,0 Gew.-%, besonders bevorzugt in einem Bereich von 0,2 Gew.-% bis 5,2 Gew.-% und ganz besonders bevorzugt in einem Bereich von 0,3 Gew.-% bis 3,1 Gew.-%, jeweils bezogen auf das Gesamtgewicht des erfindungsgemäßen Metalleffektpigments.

Die optional vorhandene Schutzschicht kann des Weiteren, beispielsweise durch Silane, oberflächenmodifiziert sein. Die Silane können dabei keine funktionelle Bindungsgruppe oder eine oder mehrere funktionelle Bindungsgruppe(n) aufweisen. Silane mit wenigstens einer funktionellen Bindungsgruppe werden im Folgenden auch als organofunktionelle Silane bezeichnet. Beispielsweise können ein oder mehrere Silane auf dieser äußeren Schutzschicht aufgebracht sein. Bei den Silanen kann es sich um Alkylsilane mit verzweigten oder unverzweigten Alkylresten mit 1 bis 24 C-Atomen, vorzugsweise 6 bis 18 C-Atomen, handeln.

Bei einer weiteren bevorzugten Ausführungsform ist das Silan ohne funktionelle Bindungsgruppe ein Alkylsilan. Das Alkylsilan weist vorzugsweise die Formel $R_{(4-z)}Si(X)_z$ auf. Hierbei ist z eine ganze Zahl von 1 bis 3, R ist eine substituierte oder unsubstituierte, unverzweigte oder verzweigte Alkylkette mit 10 bis 22 C-Atomen und X steht für eine Halogen- und/oder Alkoxygruppe. Bevorzugt sind Alkylsilane mit Alkylketten mit mindestens 12 C-Atomen. R kann auch zyklisch mit Si verbunden sein, wobei in diesem Fall z üblicherweise 2 ist.

Bei einer weiteren Ausführungsform kann auch wenigstens ein organofunktionelles Silan, das eine chemische Anbindung an einen Kunststoff, ein Bindemittel eines Lackes oder einer Farbe, etc. ermöglicht zur Oberflächenmodifizierung eingesetzt werden. Die funktionellen Gruppen des organofunktionellen Silans können auch als Kupplungsgruppen oder funktionelle Bindungsgruppen bezeichnet werden und werden bevorzugt aus der Gruppe, die aus Hydroxy, Amino, Acryl, Methacryl, Vinyl, Epoxy, Isocyanat, Cyano und Mischungen davon besteht, ausgewählt.

Die vorzugsweise als Oberflächenmodifizierungsmittel verwendeten organofunktionellen Silane, die geeignete funktionelle Gruppen aufweisen, sind kommerziell verfügbar und werden beispielsweise von der Fa. Evonik hergestellt und unter dem Handelsnamen "Dynasylan" vertrieben. Weitere Produkte können von der Fa. Momentive (Silquest-Silane) oder von der Fa. Wacker, beispielsweise Standard- und α-Silane aus der GENIOSIL-Produktgruppe, bezogen werden.

Beispiele hierfür sind 3-Methacryloxypropyltrimethoxysilan (Dynasylan MEMO, Silquest A-174NT), Vinyltri(m)ethoxysilan (Dynasylan VTMO bzw. VTEO, SilquestA-151 bzw. A-171), Methyltri(m)ethoxy¬silan (Dynasylan MTMS bzw. MTES), 3-Mercaptopropyltrimethoxysilan (Dynasylan MTMO; Silquest A-189), 3-Glycidoxypropyltrimethoxysilan (Dynasylan GLYMO, Silquest A-187), Tris[3-(trimethoxysilyl)¬propyl]isocyanurat (Silquest Y-11597), Bis[3-(triethoxysilyl)propyl]]tetrasulfid (Silquest A-1289), Bis[3-(triethoxysilyl)propyldisulfid (Silquest A-1589), beta-(3,4-Epoxycyclohexyl)ethyltrimethoxysilan (Silquest A-186), Bis(triethoxysilyl)ethan (Silquest Y-9805), gamma-Isocyanatopropyltrimethoxysilan (Silquest A-Link 35, GENIOSIL GF40), Methacryloxymethyltri(m)ethoxysilan (GENIOSIL XL 33, XL 36), (Methacryloxymethyl)(m)ethyldimethoxysilan(GENIOSIL XL 32, XL 34), (Isocyanatomethyl)-methyldimethoxysilan, (Isocyanatomethyl)trimethoxysilan, 3-(Triethoxysilyl)propylbernsteinsäure¬anhydrid (GENIOSIL GF 20), (Methacryloxymethyl)methyldiethoxysilan, 2-Acryloxyethylmethyl¬dimethoxysilan, 2-Methacryloxyethyltri¬methoxysilan, 3-Acryloxypropylmethyl¬dimethoxysilan, 2-Acryloxyethyltrimethoxysilan, 2-Methacryloxyethyl¬triethoxysilan, 3-Acryloxypropyltrimethoxysilan, 3-Acryloxypropyltripropoxy¬silan, 3-Methacryloxypropyltriethoxysilan, 3-Methacryloxypropyl¬triacetoxysilan, 3-Methacryloxypropylmethyldimethoxysilan, Vinyltrichlor¬silan, Vinyltrimethoxysilan (GENIOSIL XL 10), Vinyltris(2-methoxyethoxy)silan (GENIOSIL GF 58), Vinyltriacetoxysilan oder Mischungen davon.

Vorzugsweise werden als organofunktionelle Silane 3-Methacryloxypropyl-trimethoxysilan (Dynasylan MEMO, SilquestA-174NT), Vinyltri(m)ethoxysilan (Dynasylan VTMO bzw. VTEO, Silquest A-151 bzw. A-171), Methyltri(m)ethoxysilan (Dynasylan MTMS bzw. MTES), beta-(3,4-Epoxycyclohexyl)ethyltri¬methoxysilan (Silquest A-186), Bis(triethoxysilyl)ethan (Silquest Y-9805), gamma-Isocyanatopropyltri¬methoxysilan (Silquest A-Link 35, GENIOSIL GF40), Methacryloxymethyltri(m)ethoxysilan (GENIOSIL XL 33, XL 36), (Methacryloxymethyl)(m)ethyldimethoxysilan (GENIOSIL XL 32, XL 34), 3-(Triethoxy¬silyl)propylbernsteinsäureanhydrid (GENIOSIL GF 20), Vinyltrimethoxysilan (GENIOSIL XL 10) und/ oder Vinyltris(2-methoxyethoxy)silan (GENIOSIL GF 58) verwendet.
Es ist aber auch möglich, andere organofunktionelle Silane auf die erfindungsgemäßen Partikel oder die erfindungsgemäßen Pigmente aufzubringen.
Weiterhin lassen sich, beispielsweise kommerziell von Degussa erhältliche, wässrige Vorhydrolysate einsetzen. Hierzu gehören unter anderem wässriges Aminosiloxan (Dynasylan Hydrosil 1151), wässriges amino-/ alkylfunktionelles Siloxan (Dynasylan Hydrosil 2627 oder 2909), wässriges diaminofunktionelles Siloxan (Dynasylan Hydrosil 2776), wässriges, wässriges epoxyfunktionelles Siloxan (Dynasylan Hydrosil 2926), amino-/ alkylfunktionelles Oligosiloxan (Dynasylan 1146), vinyl-/ alkylfunktionelles Oligosiloxan (Dynasylan 6598), oligomeres Vinylsilan (Dynasylan 6490) oder oligomeres kurzkettiges alkyl-funktionelles Silan (Dynasylan 9896).
Bei einer bevorzugten Ausführungsform enthält das organofunktionelle Silangemisch neben wenigstens einem Silan ohne funktionelle Bindungsgruppe wenigstens ein amino¬funktionelles Silan. Die Aminofunktion ist eine funktionelle Gruppe, die mit den meisten in Bindemitteln vorhandenen Gruppen eine oder mehrere chemische Wechselwirkungen eingehen kann. Dies kann eine kovalente Bindung, wie z.B. mit Isocyanat- oder Carboxylat¬funktionen des Bindemittels, oder Wasserstoff¬brückenbindungen wie mit OH- oder COOR-Funktionen oder auch ionische Wechselwirkungen beinhalten. Eine Aminofunktion ist daher für den Zweck der chemischen Anbindung des Pigments an verschiedenartige Bindemittel sehr gut geeignet.

Bevorzugt werden hierzu folgende Verbindungen genommen: 3-Aminopropyltrimethoxysilan (Dynasylan AMMO; Silquest A-1110), 3-Aminopropyltriethoxysilan (Dynasylan AMEO), [3-(2-Aminoethyl)-aminopropyl]trimethoxysilan (Dynasylan DAMO, Silquest A-1120), [3-(2-Aminoethyl)-aminopropyl]triethoxysilan, triaminofunktionelles Trimethoxysilan (Silquest A-1130), Bis-(gamma-trimethoxysilylpropyl)amin (Silquest A-1170), N-Ethyl-gamma-aminoisobutyltrimethoxysilan (Silquest A-Link 15), N-Phenyl-gamma-aminopropyl¬trimethoxysilan (Silquest Y-9669), 4-Amino-3,3-dimethylbutyltrimethoxysilan (Silquest A-1637), N-Cyclohexylaminomethylmethyldiethoxysilan (GENIOSIL XL 924), N-Cyclohexyl-aminomethyltriethoxysilan (GENIOSIL XL 926), N-Phenylaminomethyl-trimethoxysilan (GENIOSIL XL 973) oder deren Mischungen.

Weiterhin können die erfindungsgemäßen Metalleffektpigmente mit einer Oberflächenmodifizierung versehen sein, welche beispielsweise die Einarbeitung der Metalleffektpigmente in unterschiedliche Medien erleichtert. Bei der Verwendung der erfindungsgemäßen Metalleffektpigmente beispielsweise in Pulverlacken, weisen die Metalleffektpigmente vorzugsweise eine der in den Hauptansprüchen der EP 2 318 463 A1 oder der EP 2 576 702 A1 offenbarten Oberflächenmodifizierungen auf. Alternativ können die erfindungsgemäßen Metalleffektpigmente eine äußerste Beschichtung gemäß EP 1 699 884 A2, Anspruch 1, welche vorzugsweise durch das Sprühtrocknungsverfahren gemäß EP 1 699 884 A2, Anspruch 35, aufgebracht wird. Bei der Verwendung der erfindungsgemäßen Metalleffektpigmente in kosmetischen Formulierungen kann beispielsweise ihre Einarbeitung in O/W-, W/O- oder W/Si-Emulsionssystemen durch eine hydrophobe Oberflächenbelegung, z.B. mit Triethoxy Caprylylsilan (INCI), erleichtert oder eine längere Emulsionsstabilität erzielt werden.

Die erfindungsgemäßen Metalleffektpigmente lassen sich auch in Mischungen mit transparenten und/oder deckenden (an)organischen Weiß-, Bunt-, Schwarzpigmenten und/oder Metalleffektpigmenten und/oder Perlglanzpigmenten und/oder Füllstoffen in der jeweils gewünschten Anwendung einsetzen. In welcher Menge die erfindungsgemäßen Metalleffektpigmente zum Einsatz kommen, hängt von der jeweiligen Anwendung sowie vom zu erzielenden optischen Effekt ab.

Die erfindungsgemäßen Metalleffektpigmente können in kosmetischen Formulierungen, Kunststoffen, Folien, Textilien, keramischen Materialien, Gläsern, Farben, Druckfarben, Tinten, Lacken und/oder Pulverlacken eingesetzt werden. Weiterhin können die erfindungsgemäßen Metalleffektpigmente auch für funktionale Applikationen, wie z.B. Lasermarkierung, Gewächshausfolien oder Agrarfolien, verwendet werden.

In kosmetischen Formulierungen, wie beispielsweise Körperpuder, Gesichtspuder, gepresstes oder loses Puder, Pudercreme, Augenmakeup wie Lidschatten, Mascara, Eyeliner, flüssige Eyeliner, Augenbrauenstift, Lippenpflegestift, Lippenstift, Lip Gloss, Lip Liner, Haarstylingkompositionen wie Haarspray, Haarmousse, Haar Gel, Haarwachs, Haarmascara, permanente oder semi-permanente Haarfarben, temporäre Haarfarben, Hautpflegekompositionen wie Lotionen, Gele, Emulsionen, Nagellackkompositionen, können die erfindungsgemäßen Metalleffektpigmente mit für die jeweilige Anwendung geeigneten Roh-, Hilfs- und Wirkstoffen kombiniert werden. Die Gesamtkonzentration erfindungsgemäßen Metalleffektpigmente in der kosmetischen Formulierung kann zwischen 0,001 Gew.-% für Rinse-off-Produkte und 40,0 Gew.-% für Leave-on-Produkte, jeweils bezogen auf das Gesamtgewicht der Formulierung, liegen.

Bei einer weiteren Ausführungsform können die erfindungsgemäßen Metalleffektpigmente in kompakter Teilchenform vorliegen. Unter kompakter Teilchenform werden Pellets in Form von vorzugsweise Zylindern und/oder Kügelchen verstanden. Die Zylinder weisen hierbei bevorzugt einen Durchmesser aus einem Bereich von 0,2 cm bis 4,2 cm, besonders bevorzugt aus einem Bereich von 0,5 cm bis 2,3 cm und ganz besonders bevorzugt aus einem Bereich von 0,7 cm bis 1,7 cm und bevorzugt eine Länge aus einem Bereich von 0,2 cm bis 7,1 cm, besonders bevorzugt aus einem Bereich von 0,6 cm bis 5,3 cm und ganz besonders bevorzugt aus einem Bereich von 0,8 cm bis 3,7 cm auf. Die Kügelchen weisen bevorzugt einen Radius von $\leq 1$ cm, besonders bevorzugt aus einem Bereich von 0,2 cm bis 0,7 cm und ganz besonders bevorzugt aus einem Bereich von 0,3 cm bis 0,5 cm auf.

Bei einer bevorzugten Ausführungsform betrifft die vorliegende Erfindung ein Metalleffektpigment umfassend ein metallisches plättchenförmiges Substrat, bevorzugt ein Aluminiumplättchen, und eine darauf aufgebrachte Beschichtung, wobei die Beschichtung

a) optional eine Schicht 1 umfassend Metalloxide, Metallhydroxide und/oder Metalloxidhydrate, wobei das Metallion wenigstens ein Metallion aus der Gruppe, bestehend aus Al, Si, Sn und Zn, umfasst oder ist,
b) eine Schicht 2 umfassend wenigstens ein Metalloxid, Metallhydroxid und/oder Metalloxidhydrat, wobei das Metallion wenigstens ein Metallion aus der Gruppe der Metalle, bestehend aus Ti, Sn und Fe, umfasst oder ist,
c) eine Schicht 3 umfassend wenigstens ein Metalloxid, Metallhydroxid und/oder Metalloxidhydrat, wobei das Metallion wenigstens ein Metallion aus der Gruppe der Metalle, bestehend aus Ti, Sn, Zr und Fe, umfasst oder ist

umfasst, wobei wenigstens eine der Schichten 2 oder 3 wenigstens zwei voneinander stofflich verschiedene Metallionen aus den vorstehend aufgeführten Gruppen umfasst, die Schichten 2 und 3 durch wenigstens eine Abstandslage der Höhe $h_a$ aus einem Bereich von 19 nm bis 66 nm unterbrochen sind und wobei innerhalb der wenigstens einen Abstandslage die Steganzahldichte in einem Bereich von 1% bis 85% liegt.

Bei einer weiteren Ausführungsform betrifft die vorliegende Erfindung ein Metalleffektpigment umfassend ein metallisches plättchenförmiges Substrat, bevorzugt ein Aluminiumplättchen, und eine darauf aufgebrachte Beschichtung, wobei die Beschichtung

a) optional eine Schicht 1, die Siliziumoxid, Siliziumhydroxid und/oder Siliziumoxidhydrat umfasst oder daraus besteht,
b) eine Schicht 2, umfassend wenigstens ein Metalloxid, Metallhydroxid und/oder Metalloxidhydrat, wobei das Metallion wenigstens ein nichtfärbendes Metallion aus der Gruppe der Metalle, bestehend aus Ti, Sn und Fe, umfasst oder ist,
c) eine Schicht 3 umfassend wenigstens ein Metalloxid, Metallhydroxid und/oder Metalloxidhydrat, wobei das Metallion wenigstens ein nichtfärbendes Metallion aus der Gruppe der Metalle, bestehend aus Ti, Sn und Fe, umfasst oder ist

umfasst und wenigstens eine der Schichten 2 oder 3 wenigstens zwei voneinander stofflich verschiedene Metallionen aus den vorstehend aufgeführten Gruppen umfasst, die Schichten 2 und 3 durch eine Abstandslage unterbrochen sind, und wobei die Metalleffektpigmente ein Aspektverhältnis aus einem Bereich von 1 bis 1500, bevorzugt aus einem Bereich von 2 bis 1200, besonders bevorzugt aus einem Bereich von 3 bis 800 und ganz besonders bevorzugt aus einem Bereich von 20 bis 500 aufweisen,

wobei die wenigstens eine Abstandslage Verbindungen und Hohlräume aufweist und

wobei die Abstandslage eine Steganzahldichte, definiert als Anzahl an Verbindungen bzw. Abstandshaltern pro Anzahl der Linien in Prozent von < 85% aufweist, wobei die parallelen Linien in einer rasterelektronenmikroskopischen Querschliffaufnahme mit einer Vergrößerung von mindestens 50000-fach, bezogen auf Polaroid 545 (4" x 5"), als Raster in 50 nm Abstand im 90° Winkel zur oberen und unteren Basislinie, welche jeweils der oberen und unteren Substratoberfläche entspricht, eingezogen werden.

Bei einer weiteren Ausführungsform betrifft die vorliegende Erfindung ein Metalleffektpigment umfassend ein metallisches plättchenförmiges Substrat, bevorzugt ein Aluminium- und/oder Eisenplättchen, und eine darauf aufgebrachte Beschichtung, wobei die Beschichtung

a) optional eine Schicht 1 umfassend Metalloxide, Metallhydroxide und/oder Metalloxidhydrate, wobei das Metallion wenigstens ein Metallion aus der Gruppe der Metalle, bestehend aus Si und Al, umfasst oder ist,
b) eine Schicht 2 umfassend wenigstens ein Metalloxid, Metallhydroxid und/oder Metalloxidhydrat, wobei die Metallionen wenigstens zwei Metallionen aus der Gruppe der Metalle, bestehend aus Ti, Fe und Sn, umfassen oder sind,
c) eine Schicht 3 umfassend wenigstens ein Metalloxid, Metallhydroxid und/oder Metalloxidhydrat, wobei die Metallionen wenigstens zwei Metallionen aus der Gruppe der Metalle, bestehend aus Ti, Fe und Sn, umfassen oder sind

umfasst und die Schichten 2 und 3 durch eine Abstandslage unterbrochen sind, wobei die Beschichtung weitere hoch- und/oder niedrigbrechende Schichten umfasst und das Metalleffektpigment wenigstens eine weitere, im Wesentlichen parallel zur Oberfläche des metallischen plättchenförmigen Substrats verlaufende Abstandslage der Höhe $h_a$ aus einem Bereich von 11 nm bis 87 nm, bevorzugt aus einem Bereich von 17 nm bis 47 nm, umfasst wobei die wenigstens eine Abstandslage Verbindungen und Hohlräume aufweist und

wobei die Abstandslage eine Steganzahldichte, definiert als Anzahl an Verbindungen bzw. Abstandshaltern pro Anzahl der Linien in Prozent von < 85% aufweist, wobei die parallelen Linien in einer rasterelektronenmikroskopischen Querschliffaufnahme mit einer Vergrößerung von mindestens 50000-fach, bezogen auf Polaroid 545 (4" x 5"), als Raster in 50 nm Abstand im 90° Winkel zur oberen und unteren Basislinie, welche jeweils der oberen und unteren Substratoberfläche entspricht, eingezogen werden.

Bei einer weiteren Ausführungsform betrifft die vorliegende Erfindung ein Metalleffektpigment umfassend ein metallisches plättchenförmiges Substrat, bevorzugt ein Aluminiumplättchen und/oder Goldbronzeplättchen, und eine darauf aufgebrachte Beschichtung, wobei die Beschichtung durch wenigstens eine, im Wesentlichen parallel zur Oberfläche des metallischen plättchenförmigen Substrats liegende Abstandslage aufweist und das Metalleffektpigment erhältlich ist durch i) optionales Aufbringen einer nicht kalzinierten Siliziumoxid-, Siliziumhydroxid- und/oder Siliziumoxidhydratschicht, ii) sequentielles Aufbringen von drei nicht kalzinierten Metalloxiden, Metallhydroxiden und/oder Metalloxidhydraten, wobei das zweite dieser drei nicht kalzinierten Metalloxide, Metallhydroxide und/oder Metalloxidhydrate stofflich verschieden von den anderen ist und derart beschaffen ist, dass es in wenigstens eines der anderen nicht kalzinierten Metalloxide, Metallhydroxide und/oder Metalloxidhydrate diffundieren kann sowie iii) Kalzinieren des in Schritt ii) erhaltenen Produktes bei einer Temperatur aus einem Bereich von 320°C bis 970°C.
Im Folgenden wird die Erfindung durch einige Beispiele näher erläutert, die Beispiele beschränken die Erfindung jedoch nicht. Alle %-Angaben der Beispiele und Vergleichsbeispiele sind als Gew.-% zu verstehen.

**I Herstellung der erfindungsgemäßen Metalleffektpigmente**

Beispiel 1

In einem Reaktionsgefäß wurden 215 g Aluminiumpaste (STAPA METALLUX Mex 214, NFA:69,1%, Fa. ECKART GmbH) mit 650 g Ethanol vorgelegt und 10 Minuten dispergiert. Anschließend wurden der Suspension 20,0 g VE-Wasser (VE = vollentsalzt) zugesetzt und auf 75°C erhitzt. Nachdem der pH-Wert mit Essigsäure auf pH 5,0 eingestellt wurde, dosierte man 200 ml eines Gemisches aus Titan(IV)isopropylat und Isopropylalkohol im Volumenverhältnis 1:1 langsam zu. Nach erfolgter Zugabe wurden zur Suspension 10 g VE-Wasser hinzugefügt und 30 Minuten nachgerührt. Anschließend wurden 30 ml einer ethanolischen $FeCl_3$-Lösung ($w(FeCl_3)$=40,0%) bei konstantem pH-Wert zudosiert. Hierbei wurde mit einer ethanolischen NaOH $w(NaOH)$=10% gegengesteuert. Nach dem Ende der Zugabe ließ man 30 Minuten nachrühren, dann wurden erneut 200 ml eines Gemisches aus Titan(IV)isopropylat und Isopropylalkohol im Volumenverhältnis 1:1 homogen zudosiert. Nachdem alle Zugaben beendet waren, ließ man die Suspension 60 Minuten nachrühren, bevor diese im noch heißen Zustand über einen Büchner Trichter abgesaugt und mit einem Gemisch aus Ethanol und VE-Wasser im Volumenverhältnis 1:1 nachgewaschen wurde. Zuletzt wurde der Filterkuchen mit reinem Ethanol $H_2O$-frei gewaschen und bei 100°C 17 Stunden im Vakuumtrockenschrank unter $N_2$-Atmosphäre getrocknet. Das getrocknete Metalleffektpigment wurde unter Schutzgas bei 500°C 60 Minuten geglüht.

Beispiel 2

In einem Reaktionsgefäß wurden 230 g Aluminiumpaste (ALOXAL PM 4010, NFA: 65,9%, Fa. ECKART GmbH) mit 630 g Ethanol vorgelegt und 10 Minuten dispergiert. Anschließend wurden der Suspension 20,0 g VE-Wasser zugesetzt und auf 75°C erhitzt. Nachdem der pH-Wert mit Essigsäure auf pH 5,0 eingestellt wurde, dosierte man 200 ml eines Gemisches aus Titan(IV)isopropylat und Isopropylalkohol im Volumenverhältnis 1:1 langsam zu. Nach erfolgter Zugabe wurden zur Suspension 10 g VE-Wasser hinzugefügt und 30 Minuten nachgerührt. Anschließend wurden 150 ml einer ethanolischen $FeCl_3$-Lösung (w($FeCl_3$)=40,0%) bei konstantem pH-Wert zudosiert. Hierbei wurde mit einer ethanolischen NaOH w(NaOH)=10% gegengesteuert. Nach dem Ende der Zugabe ließ man 30 Minuten nachrühren, dann wurden erneut 200ml eines Gemisches aus Titan(IV)isopropylat und Isopropylalkohol im Volumenverhältnis 1:1 homogen zudosiert. Nachdem alle Zugaben beendet waren, ließ man die Suspension 60 Minuten nachrühren, bevor diese im noch heißen Zustand über einen Büchner Trichter abgesaugt und mit einem Gemisch aus Ethanol und VE-Wasser im Volumenverhältnis 1:1 nachgewaschen wurde. Zuletzt wurde der Filterkuchen mit reinem Ethanol $H_2O$-frei gewaschen und bei 100°C 17 Stunden im Vakuumtrockenschrank unter $N_2$-Atmosphäre getrocknet. Das getrocknete Metalleffektpigment wurde unter Schutzgas bei 550°C 60 Minuten geglüht.

Beispiel 3

Beispiel 3 wurde analog zu Beispiel 2 durchgeführt, jedoch wurde als Ausgangsmaterial anstelle von ALOXAL PM 4010 das $SiO_2$ gekapselte Aluminiumeffektpigment STANDART PCS 3500 (Fa. ECKART GmbH) verwendet.

Beispiel 4

200 g $SiO_2$ gekapseltes Aluminiumpigment STANDART PCS 3500 der Fa. Eckart wurden in 1300 ml VE-Wasser suspendiert und unter Rühren auf 85°C erhitzt. Der pH-Wert der Suspension wurde auf pH 2,2 gesenkt. Durch Zugabe von 100 g einer Zinnchloridlösung der Konzentration c(Sn)=12g/l wurde eine Schicht "$SnO_2$" auf der Oberfläche der Aluminiumplättchen abgeschieden.

Nachdem 20 Minuten nachgerührt wurde, gab man eine Lösung von 250 ml $TiCl_4$ (200 g $TiO_2$/l VE-Wasser) der Suspension hinzu. Nach dem Ende der Zugabe wurde 10 Minuten nachgerührt und anschließend der pH-Wert auf pH 2,6 eingestellt. Anschließend wurden 60 ml einer wässrigen Eisenchloridlösung mit einer Dichte von 1,42 g/cm$^3$ zudosiert. Nach erfolgter Zudosierung wurde erneut 10 Minuten nachgerührt und durch Zugabe von 100 ml Zinnchloridlösung der Konzentration c(Sn)=12 g/l wurde eine weitere dünne Schicht Zinnoxid auf der Pigmentoberfläche abgeschieden. Anschließend wurden 250 ml einer Lösung von $TiCl_4$ (200 g $TiO_2$/l VE-Wasser) in die Suspension hinzudosiert. Im Anschluss daran wurden nach 10 Minuten 12 ml einer wässrigen Eisenchloridlösung mit einer Dichte von 1,42 g/cm$^3$ zudosiert. 15 Minuten nach erfolgter Zugabe wurde die Suspension abfiltriert und der Filterkuchen gewaschen. Der Filterkuchen wurde getrocknet und bei 550°C 60 Minuten unter Schutzgas kalziniert. Es wurden deckende, extrem chromatische, hochglänzende goldfarbene Metalleffektpigmente erhalten.

**II Charakterisierung der erfindungsgemäßen Metalleffektpigmente und Pigmente der Vergleichsbeispiele**

IIa Teilchengrößenmessung

Die Größenverteilungskurve der erfindungsgemäßen Metalleffektpigmente und Pigmente der Vergleichsbeispiele wurde mit einem Gerät der Fa. Quantachrome (Gerät: Cilas 1064) gemäß Herstellerangaben vermessen. Hierzu wurden ca. 50 ml des jeweiligen Pigments in Isopropanol suspendiert, 300 Sekunden im Ultraschallbad (Gerät: Sonorex IK 52, Fa. Bandelin) behandelt und anschließend mittels einer Pasteurpipette in die Probenvorbereitungs¬zelle des Messgerätes gegeben und mehrmals vermessen. Aus den einzelnen Messergebnissen wurden die Mittelwerte gebildet. Die Auswertung der Streulichtsignale erfolgte dabei nach der Fraunhofer Methode.

Unter der mittleren Teilchengröße $D_{50}$ wird im Rahmen dieser Erfindung der $D_{50}$-Wert der Summenhäufigkeitsverteilung der volumengemittelten Größenverteilungsfunktion, wie sie durch Laserbeugungsmethoden erhalten werden, verstanden. Der $D_{50}$-Wert gibt an, dass 50 % der Pigmente einen Durchmesser aufweisen, der gleich oder kleiner als der angegebene Wert, beispielsweise 20 $\mu m$, ist. Entsprechend gibt der $D_{90}$-Wert an, dass 90% der Pigmente einen Durchmesser aufweisen, der gleich oder kleiner als der jeweilige Messwert ist. Weiterhin gibt der $D_{10}$-Wert an, dass 10% der Pigmente einen Durchmesser aufweisen, der gleich oder kleiner als der jeweilige Messwert ist.

IIb Aspektverhältnis

Das Aspektverhältnis ist definiert als Verhältnis von mittlerer Teilchengröße $D_{50}$ zu mittlerer Dicke h der metallischen plättchenförmigen Substrate. Die mittlere Dicke der metallischen plättchenförmigen Substrate ist in Tabelle 6 angegeben.

Tabelle 1: Teilchengrößen und Aspektverhältnis

| Beispiel/ Vergleichsbeispiel | $D_{10}$ [μm] | $D_{50}$ [μm] | $D_{90}$ [μm] | Span | Aspektverhältnis |
|---|---|---|---|---|---|
| Beispiel 1 | 10,2 | 35,6 | 55,6 | 1,274 | 41 |
| Beispiel 2 | 2,2 | 34,0 | 56,8 | 1,604 | 56 |
| Beispiel 3 | 5,0 | 31,4 | 50,9 | 1,461 | 38 |
| Beispiel 4 | 4,8 | 30,6 | 51,2 | 1,516 | 36 |
| Vergleichsbeispiel 1 | 12,0 | 26,0 | 43,0 | 1,192 | 47 |

IIc Winkelabhängige Farbmessungen und Deckungsquotient

Zur Messung der Farb- und Helligkeitswerte wurden die erfindungsgemäßen Metalleffektpigmente sowie die Pigmente der Vergleichsbeispiele in einer Pigmentierungshöhe von 6 Gew.-%, jeweils bezogen auf das Gesamtgewicht des Nasslacks, in einen konventionellen Nitrocelluloselack (Dr. Renger Erco Bronzemischlack 2615e; Fa. Morton) eingerührt. Dabei wurden die jeweiligen Pigmente vorgelegt und anschließend mit einem Pinsel in den Lack dispergiert. Der fertige Lack wurde auf einem Rakelabzugsgerät (RK Print Coat Instr. LTd. Citenco Abziehgerät Modell K 101) mit einer Nassfilmdicke von 76 μm auf Schwarz-Weiß-Deckungskarten (Byko-Chart 2853, Fa. Byk-Gardner) appliziert und nachfolgend bei Raumtemperatur getrocknet.

Mit dem Mehrwinkelfarbmessgerät BYK-mac (Fa. Byk-Gardner) wurden bei einem konstanten Einfallswinkel von 45° (gemäß Herstellerangaben) bei verschiedenen Beobachtungswinkeln relativ zum Glanzwinkel die Farbwerte auf schwarzem Untergrund der Deckungskarte bestimmt. Zur Charakterisierung der Farbintensität wurde der Chromawert $C^*_{15}$ herangezogen, welcher bei einem Messwinkel von 15° entfernt vom Glanzwinkel auf dem schwarzen Untergrund der Schwarz-Weiß-Deckungskarte gemessen wurde.

Stark reflektierende Proben (Idealfall Spiegel) reflektieren nahezu das gesamte eintreffende Licht im sogenannten Glanzwinkel. Je näher die Lackapplikation am Glanzwinkel gemessen wird, desto stärker erscheint die Interferenzfarbe.

Zur Bestimmung des Deckungsquotienten $D_q$, definiert als $D_q = \frac{L^{*25}_{schwarz}}{L^{*25}_{weiß}}$, wurden die Helligkeitswerte L*25° der vorstehend beschriebenen Lackapplikationen mit dem Mehrwinkelfarbmessgerät BYK-mac (Fa. Byk-Gardner) bei einem Messwinkel von 25° auf schwarzem und auf weißem Untergrund der Schwarz-Weiß-Deckungskarte aufgenommen. Die Messgeometrie 25° bezieht sich, bei einem konstanten Einfallswinkel von 45°, auf die Differenz zum Glanzwinkel. Der Betrachtungswinkel wird von der spekularen Reflexion in der Beleuchtungsebene weg gemessen.

Tabelle 2: Farbwerte bei Beobachtungswinkel von 15° zum Glanzwinkel

| Beispiel/ Vergleichsbeispiel | L 15°(s)1 | a*15° (s) | b* 15° (s) |
|---|---|---|---|
| Beispiel 1 | 118,93 | -0,02 | 2,58 |
| Beispiel 2 | 110,69 | 19,76 | 82,32 |
| Beispiel 3 | 116,90 | -0,22 | 3,59 |
| Beisp iel 4 | 145,70 | -2,34 | 60,59 |
| Vergleichsbeispiel 1 | 127,93 | 22,86 | 73,45 |
| [1] Gemessen auf schwarzem Untergrund der Schwarz-Weiß-Deckungskarte. | | | |

IId Glanzmessungen

Der Glanz ist ein Maß für die gerichtete Reflexion. Zur Bestimmung des Glanzes wurden die Lackapplikationen aus IIb auf dem weißen Untergrund der Schwarz-Weiß-Deckungskarte mit Hilfe eines Micro-Tri-Gloss Glanzmessgerätes, Fa. Byk-Gardner, bei einem Messwinkel von 60° bezogen auf die Vertikale vermessen. Die Glanzwerte der erfindungsgemäßen Metalleffektpigmente sowie der Pigmente der Vergleichsbeispiele sind in Tabelle 3 aufgeführt.

Die erfindungsgemäßen Metalleffektpigmente aus den Beispielen 1 bis 4 zeigen zum Teil deutlich höhere Glanzwerte als die einschichtig beschichteten Pigmente aus dem Vergleichsbeispiel 1.

Die Glanzmessungen aus Tabelle 3 bestätigen die sehr hohe Reflektivität der erfindungsgemäßen Pigmente im Vergleich zum Stand der Technik.

IIe Effektmessungen

Um den optischen Effekt der erfindungsgemäßen Metalleffektpigmente objektiv zu beschreiben, wurden Effektmessungen mit dem Spektralphotometer BYK-mac (Fa. Byk-Gardner) anhand der Lackapplikationen aus IIb durchgeführt (vgl. Byk-Gardner, Katalog "Qualitätskontrolle für Lacke und Kunststoffe" 2011/2012, S. 97/ 98). Die entsprechenden Messwerte für die Glitzerintensität $S\_i$, die Glitzerfläche $S\_a$ und die Körnigkeit G sind in Tabelle 3 zusammengefasst.

Tabelle 3: Effektmessungen, Deckungsquotient und Glanz

| Beispiel/ Vergleichsbeispiel | $S\_i$ 15° (s)[1] | $S\_a$ 15° (s)[1] | G (s)[1] | $D_q$ 25° | Glanz 60° (w)[2] |
|---|---|---|---|---|---|
| Beispiel 1 | 18,94 | 32,47 | 12,03 | 0,931 | 24,9 |
| Beispiel 2 | 21,56 | 34,30 | 8,53 | 0,928 | 30,2 |
| Beispiel 3 | 14,70 | 29,11 | 10,64 | 0,926 | 29,6 |
| Beispiel 4 | 9,28 | 27,22 | 2,89 9,69 | 0,904 | 28,9 |
| Vergleichsbeispiel 1 | 2,99 | 4,32 | 2,89 | 0,999 | 25,6 |
| [1] Gemessen auf schwarzem Untergrund der Schwarz-Weiß-Deckungskarte. [2] Gemessen auf weißem Untergrund der Schwarz-Weiß-Deckungskarte. | | | | | |

Die Effektwerte $S\_i$, $S\_a$ sowie G der erfindungsgemäßen Metalleffektpigmente aus den Beispielen 1 bis 4 sind höher als die Werte des Vergleichsbeispiels 1. Die erzielbaren optischen Effekte der erfindungsgemäßen Metalleffektpigmente sind deutlich stärker als bei herkömmlichen einschichtig beschichteten Effektpigmenten aus Vergleichsbeispiel 1 ausgeprägt.

IIe Waring Blender

In der Industrie werden viele Lacke in Kreislaufsystemen verarbeitet. Hierbei werden die Lackkomponenten hohen Scherkräften ausgesetzt. Der Waring Blender Test simuliert nun diese Bedingungen und dient zur Bewertung der Ringleitungs- bzw. der Scherstabilität. Gerade Pigmente, deren Beschichtung nicht ausreichend auf dem Trägermaterial verankert ist, zeigen bei diesem Test starke Abweichungen der Chromawerte im Vergleich zu den unbehandelten Applikationen. Der Waring Blender Test kann somit als Maß für die Zwischenhaftung der Pigmentbeschichtung gegenüber Scherkräften verstanden werden.
Hierzu wurden die erfindungsgemäßen Metalleffektpigmente bzw. die Pigmente der Vergleichsbeispiele gemäß nachstehendem Ansatz eingewogen und schrittweise mit einem konventionellen Acryllack in einem 880 ml Becher angeteigt. Danach wurde die Viskosität mit Butylacetat/ Xylol 1:1 auf 17" im DIN 4 mm-Becher eingestellt. Es wurden insgesamt 600 g Lack hergestellt, wovon 400 g in ein doppelwandiges 1 kg-Gefäß mit Wasserkühlung eingefüllt und unter dem Dispermaten (Fa. Waring Blender) mit einem speziellen Aufsatz verrührt wurden. Die Rührzeit betrug 8 Minuten bei 13.500 U/Min, dann wurden 200 g Lack entnommen und der Rest wurde weitere 12 Minuten gerührt.

Ansatz: 6 % Pigment
8 % Butylacetat 85
86 % Acryllack, farblos
30 % Verdünnung Butylacetat 85/ Xylol 1:1

Jeweils 200 g des unbehandelten und des behandelten Lacks wurden mit einem Spritzautomaten und der Sata Spritzpistole LP-90 nach folgender Einstellung auf ein Prüfblech appliziert.

Einstellung: Nadel: 1.3.4
Druck: 4 bar
Gänge: Die Zahl der Spritzgänge wurde so gewählt, dass eine trockene Lackschichtdicke von 15-20 μm vorlag.

Konventionsweise gelten Effektpigmente dann als scherstabil, wenn in der Applikation nach dem Waring Blender Test die Glanz- als auch die Farbdifferenz, nahe am Glanzwinkel gemessen, relativ gering ist. Der $\Delta C^*$ 15°-Wert zur unbehandelten Probe sollte idealerweise kleiner 2 sein.

In Tabelle 4 ist die Farbänderung $\Delta C^*$ 15° sowie die Glanzänderung $\Delta$Glanz 60°der dem Waring Blender Test unterzogenen Probe zur unbehandelten Probe anhand der erfindungsgemäßen Beispiele 2 und 4 aufgezeigt.

Tabelle 4: Glanz- und Farbdifferenz im Waring Blender Test

|  | $\Delta C^*(15°)$ | $\Delta$Glanz (60°) |
|---|---|---|
| Beispiel 2 | 2,1 | -2,3 |
| Beispiel 4 | 2,6 | -1,9 |

Die erfindungsgemäßen Metalleffektpigmente aus den Beispielen 2 und 4 erfüllen die Kriterien des Tests. Der Farbunterschied ist vernachlässigbar gering. Auch unter dem Mikroskop konnten kaum Veränderungen wie Abplatzungen der Beschichtung oder sonstige entstandene Oberflächendefekte festgestellt werden.

Die erfindungsgemäßen Metalleffektpigmente zeigen sich trotz ihrer Abstandslage extrem scherstabil.

IIg Röntgenfluoreszenzanalyse (RFA)

Die Metalloxid-, Metallhydroxid- und/oder Metalloxidhydratgehalte der Partikel bzw. Pigmente wurden mittels Röntgenfluoreszenzanalyse (RFA) aus der Pulverschüttung bestimmt.

Tabelle 5:

| Beispiel | RFA (als Oxid) | | |
|---|---|---|---|
|  | Ti[%] | Fe[%] | Al[%] |
| Beispiel 1 | 25,2 | 3,7 | 70,8 |
| Beispiel 2 | 33,3 | 4,4 | 60,2 |
| Beispiel 3 | 31,9 | 4,4 | 59,8 |
| Beispiel 4 | 28,6 | 14,6 | 55,4 |
| Vergleichsbeispiel 1 | <1 | 19 | 67,6 |

IIh Bestimmung der der mittleren Dicke der metallischen plättchenförmigen Substrate, der mittleren Schichtdicke der Schichten 1, 2 und 3, der mittleren Schichtdicke der gesamten Beschichtung, der mittleren Höhe $h_a$ der Abstandslage sowie der mittleren Höhe $h_H$ der Hohlräume

Hierzu wurden die erfindungsgemäßen Metalleffektpigmente 10%ig in einem 2K Klarlack Autoclear Plus HS der Fa. Sikkens GmbH mit einem Hülsenpinsel eingearbeitet, mit Hilfe einer Spiralrakel (26 $\mu$m Nassfilmdicke) auf eine Folie appliziert und getrocknet. Nach 24 h Abtrocknungszeit wurden von diesen Rakelabzügen Querschliffe angefertigt. Die Querschliffe wurden im REM vermessen, wobei zur Bestimmung der mittleren Dicke der metallischen plättchenförmigen Substrate mindestens 100 Einzelpigmente vermessen wurden, um eine aussagefähige Statistik zu erhalten.

Zur Bestimmung der mittleren Schichtdicke der Schichten 1, 2 und 3, der mittleren Schichtdicke der gesamten Beschichtung, der mittleren Höhe ha der Abstandslage sowie der mittleren Höhe $h_H$ der Hohlräume wurde die obere und untere Substratoberfläche, d.h. die jeweils längere Seite des metallischen plättchenförmigen Substrats, jeweils als Basislinie herangezogen. Die Basislinie wurde hierbei in die rasterelektronenmikroskopische Querschliffaufnahme gelegt, indem die zwei Schnittpunkte metallisches plättchenförmiges Substrat - optionale Schicht 1 bzw. metallisches plättchenförmiges Substrat - Schicht 2 vom linken und rechten Rand der rasterelektronenmikroskopischen Querschliffaufnahme miteinander durch eine Gerade verbunden wurden. Die rasterelektronenmikroskopischen Querschliffaufnahmen wurden mit Hilfe der Bildverarbeitungssoftware AxioVision 4.6.3. (Fa. Zeiss) untersucht.

Im 90° Winkel zu diesen beiden Basislinien wurden im 50 nm Abstand so viele parallele Linien eingezogen, dass über die komplette rasterelektronenmikroskopische Querschliffaufnahme ein Raster gelegt war (Abbildung 4). Die Vergrößerung der rasterelektronenmikroskopischen Querschliffaufnahme betrug vorzugsweise mindestens 50000-fach, bezogen auf Polaroid 545. Ausgehend von der jeweiligen oberen und unteren Basislinie vom metallischen plättchenförmigen Substrat jeweils in Richtung Schicht 3 wurden die Abstände zwischen den Schnittpunkte dieser Linien an den jeweiligen Grenzflächen der optionalen Schicht 1 - Schicht 2, Schicht 2 - Abstandslage, Abstandslage - Schicht 3 und Schicht 3 - Umgebung manuell vermessen. Hierbei kam es vor, dass eine der im 50 nm Abstand eingezeichneten Linien direkt über einer Verbindungsstelle lag. In diesem Fall wurde nur der jeweilige Schnittpunkt der Linie an der Grenzfläche Schicht 3 - Umgebung erfasst. Aus diesen Messwerten ergaben sich die Schichtdicken der Schichten 1, 2 und 3, die Dicke der gesamten Beschichtung sowie die Höhe ha der Abstandslage durch Differenzbildung.

Für die Bestimmung der mittleren Höhe $h_H$ der Hohlräume wurden die Schnittpunkte dieser Linien mit der oberen und unteren Hohlraumbegrenzung innerhalb der Abstandslage herangezogen.

Für die Bestimmung der Dicke des metallischen plättchenförmigen Substrats wurden die Schittpunkte dieser Linien an der oberen und unteren Substratoberfläche jeweils zur angrenzenden Schicht herangezogen.

Aus den auf die Weise bestimmten Einzelwerten der Dicke des Substrats, der Schichtdicken, der Höhe $h_a$ sowie der Höhe $h_H$ wurden die jeweiligen arithmetischen Mittelwerte gebildet, um die oben angegebenen mittleren Schichtdicken, mittleren Dicken des metallischen plättchenförmigen Substrats, der mittleren Höhe $h_H$ bzw. der mittleren Höhe $h_a$ zu bestimmen. Für eine aussagekräftige Statistik wurden die oben beschriebenen Messungen an mindestens 100 Linien durchgeführt.

Mit dem Begriff "mittlere" ist in allen Fällen der arithmetische Mittelwert gemeint.

Querschliffe der Pigmente der Vergleichsbeispiele, welche keine Abstandslage, aber gegebenenfalls statistisch verteilte Poren innerhalb der Beschichtung aufweisen, wurden ebenfalls nach dem vorstehend beschriebenen Verfahren anhand rasterelektronenmikroskopischer Querschliffaufnahmen untersucht. Hierbei wurden, sofern eine der parallelen Linien über einer oder mehreren Poren zu liegen kam, die Höhe der Pore(n), deren Porenmittelpunkt(e) und der Abstand des Porenmittelpunkts oder der Porenmittelpunkte zur Substratoberfläche bestimmt.

Alternativ zu Querschliffen können die erfindungsgemäßen Metalleffektpigmente mittels des FIB-Verfahrens (FIB = focused ion beam) angeschnitten werden. Dazu wird ein feiner Strahl aus hochbeschleunigten Ionen (z.B. Gallium, Xenon, Neon oder Helium) mittels einer Ionenoptik auf einen Punkt fokussiert und zeilenweise über die zu bearbeitende Effektpigmentoberfläche geführt. Die Ionen geben beim Aufprall auf die Effektpigmentoberfläche einen Großteil ihrer Energie ab und zerstören die Beschichtung an diesem Punkt, was zu einem zeilenweisen Materialabtrag führt. Auch anhand der dann aufgenommenen rasterelektronenmikroskopischen Aufnahmen kann nach dem oben beschriebenen Verfahren die mittlere Höhe ha, die mittlere Schichtdicke der Schichten 1, 2 und 3 sowie die mittlere Schichtdicke der gesamten Beschichtung ermittelt werden. Auch die mittlere Dicke des metallischen plättchenförmigen Substrats kann anhand von rasterelektronenmikroskopischen Aufnahmen der durch das FIB-Verfahren angeschnittenen Metalleffektpigmente bestimmt werden.

Tabelle 6:

| Beispiel/ Vergleichsbeispiel | $d_{S1}$ [nm] | $d_{S2}$ [nm] | $h_a$ [nm] | $d_{S3}$ [nm] | $h_{ma}$ [nm] | $h_{Rma}$ | $\sigma h_{Rma}$ [%] | d [nm] | $n_S$ | $S_D$ [%] | $A_H$ [%] |
|---|---|---|---|---|---|---|---|---|---|---|---|
| Beispiel 1 | / | 53 | 16 | 49 | 60 | 0,51 | 3,6 | 860 | 14 | 65,6 | 34,4 |
| Beispiel 2 | 68 | 46 | 19 | 53 | 56 | 0,30 | 2,7 | 605 | 5 | 18,3 | 81,7 |
| Beispiel 3 | 46 | 50 | 21 | 58 | 52 | 0,30 | 4,1 | 834 | 3 | 21,8 | 78,2 |
| Beispiel 4 | 43 | 85 | 28 | 89 | 95 | 0,39 | 3,8 | 848 | 1 | 6,2 | 93,8 |
| Vergleichsbeispiel 1 | Keine Abstandslage | | | | | 0,53 | 22,3 | 556 | 17 | 95,0 | 5,0 |

d [nm] = mittlere Dicke des Substrats

$d_{S1}$ [nm] = mittlere Schichtdicke der optionalen Schicht 1

$d_{S2}$ [nm] = mittlere Schichtdicke der Schicht 2

$d_{S3}$ [nm] = mittlere Schichtdicke der Schicht 3

$n_s$ = mittlere Anzahl Stege je $\mu$m

$A_H$ [%] = Flächenanteil Hohlraum

$S_D$ = Steganzahldichte [%]

$h_{ma}$ = Mitte der Abstandslage (Summe aus der Schichtdicke der optionalen Schicht 1, der Schicht 2 und der halben Höhe $h_a$)

$h_{Rma}$ = relative Höhe der Abstandslage

$\sigma h_{Rma}$ [%] = Standardabweichung der relativen Höhe der Abstandslage

In Tabelle 6 ist die Steganzahldichte der erfindungsgemäßen Metalleffektpigmente deutlich geringer als bei dem Pigment aus Vergleichsbeispiel 1 mit einem Wert von 95%. Aufgrund der extrem geringen Anzahl an Poren liegt bei dem Pigment aus Vergleichsbeispiel 1 keine Abstandslage vor.

IIi Gasungstest

Für die Bestimmung der Gasungsstabilität wurden 15 g der erfindungsgemäßen Metalleffektpigmente sowie die Pigmente der Vergleichsbeispiele in 20,0 g Butylglykol mit einer Rührzeit von 5 min suspendiert. Zu dieser Suspension wurden 14,4 g Bindemittel farblos (ZK26-6826-402, Hersteller BASF Coatings) und 0,6 g 10 %ige Dimethylethanolaminlösung (Lösungsmittel Wasser) hinzugegeben und 5 Minuten gerührt.

23,45 g der Suspension wurden in ein Gemisch aus 233,1 g Mischlack für Effektstoffprüfung milchig/farblos (ZW42-6008-0101, Hersteller BASF Coatings), 37,5 g Wasser-Basislack-Tönpaste Rot (ZU560-329-0001, Hersteller BASF Coatings, enthaltend Eisenoxid rot, Fe2O3) und 6,0 g Wasser-Basislack-Tönpaste Schwarz (ZU42-5943-0001, Hersteller BASF Coatings, enthaltend Eisenoxid schwarz, $Fe_2O_3 \cdot FeO$) eingerührt. Nachfolgend wurde der pH-Wert der Suspension mit 10 %-iger Dimethylethanolaminlösung (Lösungsmittel Wasser) auf 8,2 eingestellt.

265 g der voranstehenden Zusammensetzung wurden in eine Gasungsflasche eingefüllt und diese mit einem Doppelkammergasblasenzähler verschlossen. Die Gaswaschflasche wurde in einem Wasserbad bei 40 °C für 1 Stunde temperiert, gasdicht verschlossen und der Test über maximal 28 Tage durchgeführt. Das entstandene Gasvolumen wurde anhand des verdrängten Wasservolumens in der oberen Kammer des Gasblasenzählers abgelesen. Bei einer Entwicklung von maximal 10 ml Wasserstoff nach 28 Tagen galt der Test als bestanden. Die Ergebnisse des Gasungstests sind in Tabelle 6 zusammengefasst.

IIj Applikation Pulverlack

Jeweils 15 g des erfindungsgemäßen Metalleffektpigments bzw. des Vergleichsbeispiels wurden zusammen mit 285 g des Pulverlacks Tiger, Firma Tiger Coatings GmbH & Co. KG, sowie mit 0,2 % Aeroxide Alu C (Fa. Evonik) in einen handelsüblichen Küchenmixer der Fa. Vorwerk, ThermoMix, für 4 Minuten auf Stufe 4 vermischt. Die gemischten Pulverlacke wurden mit der OptiSelect (Fa. ITWGema) in einer handelsüblichen Pulverkabine auf Metallblechen appliziert.

Das Applikationsverhalten, das Vorhandensein von Black Spots und die Struktur bzw. der Verlauf der Pulverlacke wurden visuell beurteilt.

IIk Chemikalientest

Das beschichtete Prüfblech aus IIj wurde in eine waagrechte Lage gebracht. Es wurden 5 Tropfen 10 %-iger HCl mit den Einwirkzeiten 180, 150, 120, 90, und 60 Minuten aufgebracht. Weiterhin wurden 5 Tropfen 1 M NaOH mit den Einwirkzeiten 180, 120, 60, 30 und 15 Minuten aufgebracht.

Danach wurden die Tropfen mit Wasser entfernt und die ehemals bedeckten Flächen mit den unbedeckten Flächen optisch verglichen. Hierbei wurde eine Bewertungsskala von 0-3 (für jeden einzelnen Punkt) herangezogen (0 = kein Angriff, 3 maximaler Abbau von Pigmenten). Die ermittelten Punkte wurden anschließend summiert. Die Ergebnisse des Chemikalientests können der Tabelle 7 entnommen werden.

Tabelle 7

| Beispiel | Gasungstest [d/ml] | Chemikalientest |
|---|---|---|
| Beispiel 3 | 28d/5ml | 1 |
| Beispiel 4 | 28d/3ml | 0 |
| Vergleichsbeispiel 1 | 5d/kaputt | 3 |

Die Vorteile der erfindungsgemäßen Metalleffektpigmente ergeben sich in der Summe verschiedener Eigenschaften. Die erfindungsgemäßen Metalleffektpigmente weisen eine hohe Deckung, eine sehr gute mechanische und chemische Stabilität sowie einen hohen Glanz und Farbstärke auf. Das Vergleichspigment weist in der Gesamtbetrachtung die genannten Eigenschaften nur in unzufrieden stellender Weise auf.

III Rasterelektronenmikroskopische Aufnahmen

Die rasterelektronenmikroskopischen Aufnahmen wurden anhand von Querschliffen der erfindungsgemäßen Metalleffektpigmente mit dem Rasterelektronenmikroskop Supra 35 (Fa. Zeiss) erhalten. Die energiedispersive Röntgenmikroanalyse (EDX-Analyse) wurde mit dem Gerät EDAX Sapphire, Fa. EDAX, durchgeführt.

**III Anwendungstechnische Beispiele**

Anwendungstechnisches Beispiel 1: Creme Lidschatten

| INCI Name | Produktname | Gew.-% | Hersteller/ Lieferant |
|---|---|---|---|
| *Phase A* | | | |
| Microcrystalline Wax | TeCero-Wax 1030 K | 4,50 | Tromm Wachs |
| Copernicia Cerifera Cera | Carnaubawachs LT 124 | 4,50 | Tromm Wachs |
| Isohexadecane | Isohexadecane | 21,00 | Ineos |
| Cyclopentasiloxane, Dimethicone/ Vinyltrimethylsiloxysilicate Crosspolymer | Belsil RG 100 Silicone Elastomer Resin Gel | 8,00 | Wacker |
| Trimethylsiloxyphenyl Dimethicone | Belsil PDM 20 | 6,00 | Wacker |
| Dimethicone | Belsil DM 100 | 14,00 | Wacker |
| Caprylic/ Capric Triglyceride | Miglyol 812 | 7,00 | Sasol |
| Cyclomethicone (and) Quaternium-90 Bentonite (and) Propylene Carbonate | Tixogel VSP-1438 | 5,00 | BYK |
| *Phase B* | | | |
| | Metalleffektpigment aus Beispiel 1 | 30,00 | |

Das Metalleffektpigment aus Beispiel 1 kann in einem Bereich von 5 bis 30,0 Gew.-%, bezogen auf das Gesamtgewicht der Lidschatten Formulierung, eingesetzt werden. Der Ausgleich auf 100 Gew.-% der Formulierung kann mit Isohexadecane erfolgen.

Phase A wurde gemischt und auf 85 °C erhitzt, Phase B wurde anschließend unter Rühren zu Phase A hinzugegeben. Nach Abfüllen in ein entsprechendes Behältnis wird die Mischung auf Raumtemperatur abgekühlt.

Anwendungstechnisches Beispiel 2: Gepresster Lidschatten

| INCI Name | Produktname | Gew.-% | Hersteller/ |
|---|---|---|---|
| *Phase A* | | | |
| Talc | Talc Powder | 36,00 | VWR |
| Bentonite | Optigel CK-PC | 5,00 | BYK |
| Synthetic Fluorphlogopite | Synafil S 1050 | 13,00 | ECKART |
| Aluminium Starch | Agenaflo OS 9051 | 10,00 | Agrana |
| Magnesium Stearate | Magnesium Stearate | 6,00 | VWR |
| | Metalleffektpigment aus | 20,00 | |
| *Phase B* | | | |
| Cyclomethicone | Xiameter PMX-0345 | 5,00 | Dow Corning |
| Octyldodecyl Stearoyl Stearate | Ceraphyl 847 | 5,00 | Ashland |

Das Metalleffektpigment aus Beispiel 2 kann in einem Bereich von 5,0 bis 40,0 Gew.-%, bezogen auf das Gesamtgewicht der Lidschatten Formulierung, eingesetzt werden. Der Ausgleich auf 100 Gew.-% der Formulierung kann mit Talc erfolgen.

Phase A wurde für 30s bei 2500 U/min in einem Hochgeschwindigkeitsmixer gemischt. Anschließend wurde Phase B zugegeben und die Mischung für 60s bei 3000 U/min im gleichen Mixer gemischt. Zuletzt wird die Pulvermischung mittels einer Lidschattenpresse bei 100 bar für 30 Sekunden in Form gepresst.

Anwendungstechnisches Beispiel 3: Körperpuder

| INCI Name | Produktname | Gew.-% | Hersteller/Lieferant |
|---|---|---|---|
| *Phase A* | | | |
| Synthetic Fluorphlogopite | Synafil S 1050 | 40,00 | ECKART |
| Polypropylene | Synafil W 1234 | 8,00 | ECKART |
| Bentonite | Optigel CK-PC | 10,00 | BYK |
| Talc | Talc Powder | 18,00 | VWR |
| Magnesium Stearate | Magnesium Stearate | 4,00 | Applichem |
| | MEtalleffektpigment aus Beispiel 3 | 20,00 | |

Das Metalleffektpigment aus Beispiel 3 kann in einem Bereich von 0,2 bis 5,0 Gew.-%, bezogen auf das Gesamtgewicht der Körperpuder Formulierung, eingesetzt werden. Der Ausgleich auf 100 Gew.-% der Formulierung kann mit Synafil S 1050 erfolgen.

Phase A wurde gemischt und anschließend wurde der Puder in ein geeignetes Gefäß abgefüllt.

Anwendungstechnisches Beispiel 4: Lipgloss

| INCI Name | Produktname | Gew.-% | Hersteller/ Lieferant |
|---|---|---|---|
| *Phase A* | | | |
| Hydrogenated Polyisobutene (and) Ethylene/Propylene/ Styrene Copolymer (and) Butylene/Ethylene/Styrene Copolymer | Versagel ME 750 | 75,30 | Penreco |
| Simmondsia Chinensis (Jojoba) Seed Oil | Jojoba Oil - Natural | 2,00 | BioChemica |
| Caprylyl Trimethicone | Silcare Silicone 31M50 | 7,00 | Clariant |
| Stearyl Dimethicone | Silcare Silicone 41M65 | 3,20 | Clariant |
| Hydrogenated Polydecene | Dekanex 2004 FG | 4,00 | IMCD |
| Isopropyl Myristate | Isopropyl Myristate | 4,50 | VWR |
| *Phase B* | | | |
| | Metalleffektpigment aus Beispiel 1 | 4,00 | |

Das Metalleffektpigment aus Beispiel 1 kann in einem Bereich von 0,10 bis 8,00 Gew.-%, bezogen auf das Gesamtgewicht der Lipgloss Formulierung, eingesetzt werden. Der Ausgleich auf 100 Gew.-% der Formulierung kann mit Versagel ME 750 erfolgen.

Phase A wurde auf 85°C erhitzt, anschließend wurde das Pigment aus Beispiel 1 der Phase B hinzugegeben, gerührt bis eine gleichmäßige Konsistenz entstand und dann in ein Lip Gloss Gefäß abgefüllt.

Anwendungstechnisches Beispiel 5: Lippenstift

| INCI Name | Produktname | Gew.-% | Hersteller/ |
|---|---|---|---|
| *Phase A* | | | |
| Octyldodecanol | Eutanol G | 42,5 | BASF |

(fortgesetzt)

| INCI Name | Produktname | Gew.-% | Hersteller/ |
|---|---|---|---|
| *Phase A* | | | |
| Candelilla Cera | Kahlwax 2039 | 6,00 | Kahl |
| Copernicia Cerifera (Carnauba) Wax | Kahlwax 2442 | 6,00 | Kahl |
| Bis-Diglyceryl Polyacyladipate-2 | Softisan 649 | 10,00 | Sasol |
| Polyisobutene | Rewopal PIB 1000 | 10,00 | Evonik |
| Hydrogenated Polydecene | Silkflo 364 NF | 5,00 | Ineos |
| C10-18 Triglycerides | Lipocire A Pellets | 5,00 | Gattefosse |
| Acacia Decurrens/Jojoba/Sunflower Seed Wax/ Polyglyceryl-3 Esters | Hydracire S | 5,00 | Gattefosse |
| Tocopheryl Acetate | dl-alpha-Tocopheryl | 0,50 | IMCD |
| *Phase B* | | | |
| | Metalleffektpigment aus Beispiel 2 | 10,00 | |

Das Metalleffektpigment aus Beispiel 2 kann in einem Bereich von 0,5 bis 20,0 Gew.-%, bezogen auf das Gesamtgewicht der Lippenstift Formulierung, eingesetzt werden. Der Ausgleich auf 100 Gew.-% der Formulierung kann mit Eutanol G erfolgen.

Phase A wurde auf 85°C erhitzt, danach wurde Phase B zu Phase A gegeben und gemischt. Anschließend wurde diese Mischung bei einer Temperatur von 75°C in einem Lippenstiftform abgefüllt.

Anwendungstechnisches Beispiel 6: Flüssig Lidstrich

| INCI Name | Produktname | Gew.-% | Hersteller/ Lieferant |
|---|---|---|---|
| *Phase A* | | | |
| Aqua | Water | 56,90 | |
| Bentonite (and) Xanthan Gum | Optigel WX-PC | 1,40 | |
| *Phase B* | | | |
| Lecithin | Emulmetik 100 | 0,10 | Lucas Meyer |
| Copernicia Cerifera Cera | Kahlwax 2442 | 1,00 | Kahl |
| Stearic Acid | Stearic Acid | 3,50 | Lipo Chemicals |
| Hydrogenated Polyisobutene | Panalane L14 E | 5,00 | Ineos |
| Polysorbate 60 | Mulsifan CPS 60 | 1,50 | Zschimmer & Schwarz |
| *Phase C* | | | |
| | Metalleffektpigment aus Beispiel 3 | 4,00 | |
| Polyurethane-35 | Baycusan C 1004 | 18,00 | Bayer Cosmetics |
| Aqua and CI 77499 and Methylpropanediol and Ammonium Acrylates Copolymer and Simethicone and Caprylyl Glycol and Phenylpropanol Sodium Acrylates Copolymer | WorléeBase AQ 77499/1 | 8,00 | Worlee |

(fortgesetzt)

| Phase C | | | |
|---|---|---|---|
| Phenoxyethanol, Ethylhexylglycerin | Euxyl PE 9010 | 0,60 | Schülke & Mayr |

Das Metalleffektpigment aus Beispiel 3 kann in einem Bereich von 0,5 bis 8,0 Gew.-%, bezogen auf das Gesamtgewicht der Lidstrich Formulierung, eingesetzt werden. Der Ausgleich auf 100 Gew.-% der Formulierung kann mit Wasser erfolgen.

Optigel WX-PC wurde in Wasser der Phase A dispergiert und 10 Minuten gerührt. Phase A und Phase B wurden separat auf 80°C erhitzt. Danach wurde Phase B langsam zu Phase A unter Rühren hinzugefügt. Nach dem Abkühlen auf 45°C wurden die Inhaltsstoffe der Phase C nach und nach hinzugefügt und in eine geeignete Verpackung abgefüllt.

Anwendungstechnisches Beispiel 7: Mousse

| INCI Name | Produktname | Gew.-% | Hersteller/Lieferant |
|---|---|---|---|
| Phase A | | | |
| Cyclopentasiloxane | Xiameter PMX-0245 Cyclosiloxane | 8,60 | Dow Corning |
| Hydrogenated Polyisobutene | MC 30 | 4,00 | Sophim |
| Dimethicone (and) Dimethicone Crosspolymer | Dow Corning 9041 Silicone Elastomer Blend | 37,14 | Dow Corning |
| Squalane | Squalane | 5,74 | Impag |
| Isononyl Isononanoate | Dermol 99 | 10,16 | Akzo International |
| Hydrogenated Jojoba Oil | Jojoba Butter LM | 2,15 | Desert Whale |
| Hydrogenated Jojaba Oi | Jojoba Butter HM | 1,00 | Desert Whale |
| C30-45 Alkyl Methicone (and) C30-45 Olefin | Dow Corning AMS-C30 Cosmetic Wax | 1,15 | Dow Corning |
| Stearyl Dimethicone | Dow Corning 2503 Cosmetic Wax | 0,47 | Dow Corning |
| Cyclopentasiloxane (and) Polypropylsilsesquioxane | Dow Corning 670 Fluid | 5,00 | Dow Corning |
| Phase B | | | |
| Dimethicone/ Vinyl Dimethicone Cross polymer | Dow Corning 9506 Powder | 16,02 | Dow Corning |
| Silica Dimethyl Silylate | Covasilic 15 | 0,17 | LCW |
| Talc | Talc Powder | 5,00 | Sigma-Aldrich |
| | Metalleffektpigment aus Beispiel 2 | 3,00 | |
| Phase D | | | |
| Phenoxyethanol, Ethylhexylglycerin | Euxyl PE 9010 | 0,40 | Schülke & Mayr |

Das Metalleffektpigment aus Beispiel 2 kann in einem Bereich von 0,1 bis 8,0 Gew.-%, bezogen auf das Gesamtgewicht der Mousse Formulierung, eingesetzt werden. Der Ausgleich auf 100 Gew.-% der Formulierung kann mit Dow Corning 9041 Elastomer erfolgen.

Phase A wurde gemischt und solange erhitzt bis alles aufgeschmolzen war. Phase B wurden separat eingewogen und mit einem Hochgeschwindigkeitsmixer für 60s bei 2400 U/min gemischt. Die Hälfte der geschmolzenen Phase A wurde zur Phase B zugegeben und wieder im Mixer bei 2400 U/min für 30s gemischt. Anschließend wurde der übrige Teil der Phase B ebenfalls zur Phase A zugegeben und wieder bei 2400 U/min für 30s gemischt. Zuletzt wird Phase C zu Phase AB gegeben und wieder bei 2400 U/min für 30s im Hochgeschwindigkeitsmixer gemischt.

Abbildung 1: Ausschnitt einer rasterelektronenmikroskopischen Querschliffaufnahme in 50000-facher Vergrößerung (bezogen auf Polaroid 545) mit eingezeichneter Basislinie an der Grenzfläche plättchenförmiges Substrat- Beschichtung und senkrecht zur Basislinie angeordneten Linien. Mit "x" sind die Schnittpunkte an den Grenzflächen markiert.

Abbildung 2: Schematische Darstellung der Abstandslage.

Abbildung 3: Schematische Darstellung der Position der Abstandslage.

**Patentansprüche**

1. Metalleffektpigment umfassend ein metallisches plättchenförmiges Substrat und auf dem Substrat aufgebrachte Beschichtung, wobei die Beschichtung

   a) optional eine Schicht 1 umfassend wenigstens ein Metalloxid, Metallhydroxid und/oder Metalloxidhydrat, wobei das Metallion wenigstens ein Metallion ausgewählt aus der Gruppe der Metalle, bestehend aus Al, Si, Sn und Zn umfasst oder ist,
   b) eine Schicht 2 umfassend wenigstens ein Metalloxid, Metallhydroxid und/oder Metalloxidhydrat,
   c) eine Schicht 3 umfassend wenigstens ein Metalloxid, Metallhydroxid und/oder Metalloxidhydrataufweist, wenigstens eine der Schichten 2 oder 3 wenigstens zwei verschiedene Metallionen enthält und die Schichten 2 und 3 durch eine Abstandslage unterbrochen sind, wobei die wenigstens zwei verschiedenen Metallionen der Schicht 2 und/oder 3 aus der Gruppe der Metalle, bestehend aus Ti, Fe, Sn, Mn, Zr, Ca, Sr, Ba, Ni, Sb, Ag, Zn, Cu, Ce, Cr und Co, ausgewählt sind,

   wobei die wenigstens eine Abstandslage Verbindungen und Hohlräume aufweist und
   wobei die Abstandslage eine Steganzahldichte, definiert als Anzahl an Verbindungen bzw. Abstandshaltern pro Anzahl der Linien in Prozent von < 85% aufweist, wobei die parallelen Linien in einer rasterelektronenmikroskopischen Querschliffaufnahme mit einer Vergrößerung von mindestens 50000-fach, bezogen auf Polaroid 545 (4" x 5"), als Raster in 50 nm Abstand im 90° Winkel zur oberen und unteren Basislinie, welche jeweils der oberen und unteren Substratoberfläche entspricht, eingezogen werden.

2. Metalleffektpigment gemäß Anspruch 1, wobei das metallische plättchenförmige Substrat aus der Gruppe, bestehend aus Aluminiumplättchen, Kupferplättchen, Zinkplättchen, Eisenplättchen, Titanplättchen, Edelstahlplättchen, Silberplättchen, Legierungen und Mischungen der vorstehend aufgeführten Metalle, ausgewählt wird.

3. Metalleffektpigment gemäß einem der vorstehenden Ansprüche, wobei das Effektpigment weitere hoch- und niedrigbrechende Schichten sowie optional wenigstens eine weitere Abstandslage umfasst.

4. Metalleffektpigment gemäß einem der vorstehenden Ansprüche, wobei die wenigstens zwei verschiedenen Metallionen der Schicht 2 und/oder Schicht 3 aus der Gruppe der Metalle, bestehend aus Ti, Fe, Sn, Ag, Zr und Ce, ausgewählt sind.

5. Metalleffektpigment gemäß einem der vorstehenden Ansprüche, wobei die wenigstens eine Abstandslage jeweils eine mittlere Höhe $h_a$ aus einem Bereich von 5 nm bis 120 nm aufweist.

6. Metalleffektpigment gemäß einem der vorstehenden Ansprüche, wobei die wenigstens eine Abstandslage im Wesentlichen parallel zur Oberfläche des metallischen plättchenförmigen Substrats angeordnet ist.

7. Metalleffektpigment gemäß einem der vorstehenden Ansprüche, wobei das Metalleffektpigment innerhalb der Abstandslage, verteilt über das gesamte Metalleffektpigment, gemessen anhand rasterelektronenmikroskopischer Querschliffaufnahmen, einen Flächenanteil an Hohlräumen aus einem Bereich von 51% bis 99% und einen Flächenanteil an Verbindungen aus einem Bereich von 3% bis 49% aufweist.

8. Verfahren zur Herstellung des Metalleffektpigments gemäß einem der Ansprüche 1 bis 7, wobei das Verfahren die folgenden Schritte umfasst:

   (i) Optionales Aufbringen einer nicht kalzinierten Metalloxid-, Metallhydroxid- und/oder Metalloxidhydratschicht, wobei das Metallion wenigstens ein Metallion ausgewählt aus der Gruppe der Metalle, bestehend aus Al, Si, Sn und Zn umfasst oder ist, auf dem metallischen plättchenförmigen Substrat,

(ii) sequentielles Aufbringen von drei nicht kalzinierten Schichten A, B und C aus oder mit jeweils wenigstens einem Metalloxid, Metallhydroxid und/oder Metalloxidhydrat, wobei die Schichten A, B und C unmittelbar aufeinander angeordnet werden und wobei das in der Schicht B aufgebrachte wenigstens eine Metalloxid, Metallhydroxid und/oder Metalloxidhydrat in Bezug auf das Metallion verschieden von dem oder den Metallion(en) der Metalloxide, Metallhydroxide und/oder Metalloxidhydrate der Schicht A und/oder Schicht C ist, wobei die drei sequenziell aufgebrachten Metalloxide, Metallhydroxide und/oder Metalloxidhydrate zur Erzeugung der Schichten A, B und C, kein Metallion, ausgewählt aus der Gruppe der Metalle, bestehend aus Si, Mg und Al, umfasst oder ist,

(iii) Kalzinieren, optional unter reduzierenden Bedingungen, des in Schritt (ii) erhaltenen Produkts bei einer Temperatur aus einem Bereich von 320°C bis 970°C unter Erhalt des wenigstens eine Abstandslage umfassenden Metalleffektpig ments,

wobei die in Schicht B enthaltenen Metallionen wenigstens teilweise, in Schicht A und/oder Schicht C unter Ausbildung der wenigstens einen Abstandslage im kalzinierten Effektpigment diffundieren.

9. Verwendung des Metalleffektpigments gemäß einem der Ansprüche 1 bis 7 in kosmetischen Formulierungen, Kunststoffen, Folien, Textilien, keramischen Materialien, Gläsern, Farben, Druckfarben, Tinten, Lacken und/oder Pulverlacken.

10. Gegenstand umfassend wenigstens ein Metalleffektpigment gemäß einem der Ansprüche 1 bis 7.

**Claims**

1. A metal effect pigment comprising a metallic, platelet-like substrate and a coating applied on the substrate, wherein the coating comprises

   a) optionally a layer 1 comprising at least one metal oxide, metal hydroxide and/or metal oxide hydrate, wherein the metal ion comprises or is at least one metal ion selected from the group of metals consisting of Al, Si, Sn and Zn,
   b) a layer 2 comprising at least one metal oxide, metal hydroxide and/or metal oxide hydrate,
   c) a layer 3 comprising at least one metal oxide, metal hydroxide and/or metal oxide hydrate, at least one of the layers 2 or 3 contains at least two different metal ions and the layers 2 and 3 are disconnected by a spacer layer, wherein the at least two different metal ions of the layer 2 and/or 3 are selected from the group of metals consisting of Ti, Fe, Sn, Mn, Zr, Ca, Sr, Ba, Ni, Sb, Ag, Zn, Cu, Ce, Cr and Co,

      wherein the at least one spacer layer includes connections and cavities, and
      wherein the spacer layer has a network density defined as number of connections or spacers for each number of the lines in percent of < 85%, wherein the parallel lines are drawn in a scanning electron microscopy cross-sectional micrograph at a magnification of at least 50000 times, based on Polaroid 545 (4" x 5"), as a grid spaced at 50 nm at 90 degrees with the upper and lower base lines corresponding to each of the upper and lower substrate surfaces.

2. The metal effect pigment according to claim 1, wherein the metallic, platelet-like substrate is selected from the group consisting of aluminium platelets, copper platelets, zinc platelets, iron platelets, titanium platelets, stainless steel platelets, silver platelets, alloys and mixtures of the aforementioned metals.

3. The metal effect pigment according to any one of the preceding claims, wherein the effect pigment comprises further high-refractive and low-refractive layers and optionally at least one further spacer layer.

4. The metal effect pigment according to any one of the preceding claims, wherein the at least two different metal ions of the layer 2 and/or layer 3 are selected from the group of metals consisting of Ti, Fe, Sn, Ag, Zr and Ce.

5. The metal effect pigment according to any one of the preceding claims, wherein the at least one spacer layer has respectively a mean height $h_a$ from a range from 5 nm to 120 nm.

6. The metal effect pigment according to any one of the preceding claims, wherein the at least one spacer layer is arranged substantially parallel to the surface of the metallic, platelet-like substrate.

**7.** The metal effect pigment according to any one of the preceding claims, wherein the metal effect pigment within the spacer layer, distributed over the entire metal effect pigment, measured on the basis of scanning electron microscopy cross-sectional micrographs, comprises an area ratio of cavities from a range from 51% to 99% and an area ratio of connections from a range from 3% to 49%.

**8.** A method for the production of the metal effect pigment according to any one of claims 1 to 7, wherein the method comprises the following steps:

(i) optionally applying a non-calcinated metal oxide, metal hydroxide and/or metal oxide hydrate layer, wherein the metal ion comprises or is at least one metal ion selected from the group of metals consisting of Al, Si, Sn and Zn, to the metallic, platelet-like substrate,
(ii) sequentially applying three non-calcinated layers A, B and C, each consisting of or comprising at least one metal oxide, metal hydroxide and/or metal oxide hydrate, wherein the layers A, B and C are arranged directly one on top of another and wherein the at least one metal oxide, metal hydroxide and/or metal oxide hydrate applied in the layer B, in relation to the metal ion, is different from the metal ion(s) of the metal oxides, metal hydroxides and/or metal oxide hydrates of layer A and/or layer C, wherein the three sequentially applied metal oxides, metal hydroxides and/or metal oxide hydrates for producing the layers A, B and C are not or do not comprise any metal ion selected from the group of metals consisting of Si, Mg and Al,
(iii) calcinating, optionally under reducing conditions, the product obtained in step (ii) at a temperature within a range from 320°C to 970°C, thereby obtaining the metal effect pigment having at least one spacer layer,

wherein the metal ions present in layer B diffuse at least partly into layer A and/or layer C to form the at least one spacer layer in the calcinated effect pigment.

**9.** A use of the metal effect pigment according to any one of claims 1 to 7 in cosmetic formulations, plastics, films, textiles, ceramic materials, glasses, paints, printing inks, writing inks, varnishes and/or powder coatings.

**10.** An object comprising at least one metal effect pigment according to any one of claims 1 to 7.

**Revendications**

**1.** Pigment à effet métallique comprenant un substrat lamellaire métallique et un revêtement appliqué sur le substrat, le revêtement présentant

a) facultativement une couche 1 comprenant au moins un oxyde métallique, un hydroxyde métallique et/ou un oxyde métallique hydraté, l'ion métallique comprenant ou étant au moins un ion métallique sélectionné dans le groupe des métaux constitué d'Al, Si, Sn et Zn,
b) une couche 2 comprenant au moins un oxyde métallique, un hydroxyde métallique et/ou un oxyde métallique hydraté,
c) une couche 3 comprenant au moins un oxyde métallique, un hydroxyde métallique et/ou un oxyde métallique hydraté,
au moins l'une des couches 2 ou 3 contenant au moins deux ions métalliques différents et les couches 2 et 3 étant interrompues par une couche d'espacement, les au moins deux ions métalliques différents des couches 2 et/ou 3 étant sélectionnés dans le groupe des métaux constitué de Ti, Fe, Sn, Mn, Zr, Ca, Sr, Ba, Ni, Sb, Ag, Zn, Cu, Ce, Cr et Co,
la au moins une couche d'espacement comportant des liaisons et des vides et
la couche d'espacement ayant une densité traverses, définie comme le nombre de liaisons ou d'éléments d'espacement par nombre de lignes en pourcentage, de < 85 %, les lignes parallèles étant insérées dans une micrographie électronique à balayage avec un grossissement d'au moins 50 000 fois, sur la base de Polaroid 545 (4" x 5"), sous la forme d'une grille à une distance de 50 nm à un angle de 90° par rapport aux lignes de base supérieure et inférieure, qui correspondent respectivement aux surfaces supérieure et inférieure du substrat.

**2.** Pigment à effet métallique selon la revendication 1, dans lequel le substrat lamellaire métallique est sélectionné dans le groupe constitué des lamelles d'aluminium, des lamelles de cuivre, des lamelles de zinc, des lamelles de fer, des lamelles de titane, des lamelles d'acier inoxydable, des lamelles d'argent, des alliages et des mélanges des métaux susmentionnés.

3. Pigment à effet métallique selon l'une quelconque des revendications précédentes, le pigment à effet comprenant d'autres couches faiblement et hautement réfringentes ainsi que, facultativement, au moins une autre couche d'espacement.

4. Pigment à effet métallique selon l'une quelconque des revendications précédentes, dans lequel les au moins deux ions métalliques différents de la couche 2 et/ou de la couche 3 sont sélectionnés dans le groupe des métaux constitué de Ti, Fe, Sn, Ag, Zr et Ce.

5. Pigment à effet métallique selon l'une quelconque des revendications précédentes, l'au moins une couche d'espacement présentant une hauteur moyenne $h_a$ située dans une plage allant de 5 nm à 120 nm.

6. Pigment à effet métallique selon l'une quelconque des revendications précédentes, l'au moins une couche d'espacement étant disposée essentiellement parallèle à la surface du substrat lamellaire métallique.

7. Pigment à effet métallique selon l'une quelconque des revendications précédentes, le pigment à effet métallique présentant, dans la couche d'espacement, réparties sur l'ensemble du pigment à effet métallique, mesurées en analysant les sections transversales au microscope électronique à balayage, une proportion de vides située dans une plage allant de 51 % à 99 % en aire et une proportion de liaisons située dans une plage allant de 3 % à 49 % en aire.

8. Procédé de production du pigment à effet métallique selon l'une des revendications 1 à 7, le procédé comprenant les étapes suivantes :

   (i) appliquer facultativement une couche d'oxyde métallique, d'hydroxyde métallique et/ou d'oxyde métallique hydraté non calcinée, l'ion métallique comprenant et/ou étant au moins un ion métallique sélectionné dans le groupe des métaux constitué d'Al, Si, Sn et Zn, sur le substrat lamellaire métallique,
   (ii) appliquer séquentiellement trois couches A, B et C non calcinées constituées ou comprenant chacune au moins un oxyde métallique, un hydroxyde métallique et/ou un oxyde métallique hydraté, les couches A, B et C étant agencées directement les unes sur les autres et l'au moins un oxyde métallique, hydroxyde métallique et/ou oxyde métallique hydraté appliqué dans la couche B étant, pour ce qui est de l'ion métallique, différent du ou des ions métalliques des oxydes métalliques, hydroxydes métalliques et oxydes métalliques hydratés de la couche A et/ou de la couche C, les trois oxydes métalliques, hydroxydes métalliques et/ou oxydes métalliques hydratés appliqués séquentiellement pour former les couches A, B et C ne comprenant ou n'étant aucun ion métallique sélectionné dans le groupe des métaux constitué de Si, Mg et Al,
   (iii) calciner, facultativement dans des conditions réductrices, le produit obtenu à l'étape (ii) à une température située dans une plage allant de 320 °C à 970 °C pour obtenir le pigment à effet métallique comprenant au moins une couche d'espacement, les ions métalliques contenus dans la couche B se diffusant au moins partiellement dans la couche A et/ou dans la couche C avec formation de la au moins une couche d'espacement dans le pigment à effet calciné.

9. Utilisation du pigment à effet métallique selon l'une quelconque des revendications 1 à 7 dans des formulations cosmétiques, des matières plastiques, des feuilles, des textiles, des matériaux céramiques, des verres, des couleurs, des encres d'imprimerie, des encres, des peintures et/ou des peintures en poudre.

10. Objet comprenant au moins un pigment à effet métallique selon l'une quelconque des revendications 1 à 7.

Abbildung 1:

Abbildung 2:

→ Höhe $h_a$ der Abstandslage

Plättchenförmiges
Substrat

Abbildung 3:

→ 6/6 keine Abstandslage erlaubt

→ 2/6 bis 5/6 Abstandslage erlaubt

→ 1/6 keine Abstandslage erlaubt

**Plättchenförmiges Substrat**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1270682 A2
- EP 1114103 A1
- EP 1685198 A2
- EP 0708154 A2
- EP 0668329 A2
- EP 1553144 A1
- DE 19836810 A1
- DE 102011012214 A1
- EP 2832801 A1
- WO 9638505 A1
- EP 1251152 A1
- WO 2004087816 A2
- WO 2008077612 A2
- WO 2009144005 A1
- EP 2371908 A2
- EP 1546063 A1
- EP 1121334 A1
- EP 2318463 A1
- EP 2576702 A1
- EP 1699884 A2

**In der Beschreibung aufgeführte Nicht-Patentliteratur**

- **BYK-GARDNER.** *Qualitätskontrolle für Lacke und Kunststoffe,* 2011, 97-98